Europäisches Patentamt

European Patent Office

Office européen des brevets

(19)

(11) EP 0 913 702 A1

(12) DEMANDE DE BREVET EUROPEEN

(43) Date de publication:
06.05.1999 Bulletin 1999/18

(51) Int Cl.⁶: G01S 1/04, H04B 1/707

(21) Numéro de dépôt: 98402379.6

(22) Date de dépôt: 28.09.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 02.10.1997 FR 9712283

(71) Demandeur: DASSAULT ELECTRONIQUE
F-92214 Saint-Cloud (FR)

(72) Inventeur: Auber, Jean-Claude
78490 Grosrouvre (FR)

(74) Mandataire: Plaçais, Jean-Yves
Cabinet Netter,
40, rue Vignon
75009 Paris (FR)

(54) **Récepteur de radionavigation, en particulier du type GPS**

(57) Un récepteur de signaux à porteuse modulée munie d'un marqueur temporel à code pseudo-aléatoire, notamment pour la radionavigation, comprend des modules à coïncidence comportant chacun des moyens de mémoire chronométrique (71-75,80-89) qui réceptionne un signal utile, stockent comme données de calage temporel des estimées de calage de code (C_PHI) et d'état de porteuse en fréquence (P_DF) et phase (P_PHI), et en tirent, avec une horloge locale, une image locale de porteuse et au moins une réplique locale du code, pour le signal concerné, et des asservissements de code et de porteuse (40,50,59), corrélant le signal utile et la réplique locale de code à l'aide d'un signal d'écart de fréquence et de phase (DVCa) entre la porteuse du signal utile et l'image de porteuse. Il comprend en outre des moyens de transformation de Fourier recevant le signal d'écart (DVCa) et des moyens de gestion/décision (90) qui invalident les données de calage temporel lorsque la transformation de Fourier indique la présence d'énergie en dehors du voisinage d'une raie centrale de coïncidence.

FIG.2

## Description

L'invention concerne la radionavigation, qui utilise le temps de propagation d'une onde électromagnétique à marqueur temporel entre un émetteur et un récepteur.

Dans les systèmes de navigation récents, le marqueur temporel de l'onde porteuse est du type pseudo-bruit répétitif; on utilise en pratique un code pseudo-aléatoire. A la réception, le temps de propagation de l'onde se manifeste à la fois par un décalage temporel du code pseudo-aléatoire et par un décalage de phase de la porteuse. En présence d'un mouvement relatif sur l'axe émetteur/récepteur (ligne de visée), il s'y ajoute un décalage de fréquence de la porteuse, dû à l'effet Doppler.

Différentes sources d'erreur existent: certaines, liées à la traversée de la troposphère ou de l'ionosphère, ou bien à la variation de conductivité des sols, affectent de manière générale la vitesse de propagation des ondes; d'autres sources d'erreurs tiennent au fait que le trajet parcouru par l'onde radioélectrique jusqu'au récepteur n'est pas rectiligne, d'autres encore au fait que le récepteur perçoit une combinaison de différents trajets issus de réflexions diverses, généralement dues à des surfaces voisines de l'antenne de réception. C'est ce qu'on appelle les erreurs de trajets multiples: au trajet direct (le plus court) se superposent d'autres trajets indésirés.

Dans les systèmes de radionavigation les plus utilisés à ce jour, dits GPS et GLONASS, les émissions proviennent de satellites.

Actuellement, le problème principal est de combattre les effets des trajets multiples, ainsi qu'en témoigne l'article "Conquering multipath: The GPS accuracy battle", Lawrence R. WEILL, revue GPS World, Avril 1997, pp 59-66. Tel est le but principal de la présente invention.

L'invention s'applique à un dispositif récepteur de signaux ou ondes radio-électriques, qui portent un marqueur temporel à pseudo-bruit répétitif, du genre code pseudo-aléatoire, en particulier pour la radionavigation.

Un tel dispositif comporte une réception haute fréquence, dont la sortie (ou "signal utile") est distribuée à plusieurs canaux ou modules, dont chacun est affecté à la recherche d'une coïncidence (calage temporel) avec un signal radio-électrique choisi respectif, distingué par son code et/ou par sa fréquence porteuse. Il s'y ajoute des moyens d'exploitation des données de calage temporel fournies par ces modules à recherche de coïncidence (ou plus simplement : module à coïncidence).

Chaque module à coïncidence comprend d'une part des moyens formant mémoire chronométrique, aptes à recevoir et/ou stocker une estimée de calage de code et une estimée d'état de porteuse en fréquence et phase, ainsi qu'à en tirer, à l'aide d'une horloge locale, une image locale de porteuse et au moins une réplique locale du code, pour le signal radio-électrique concerné. Il comprend d'autre part des asservissements visant à faire coïncider la réplique locale du code avec le code reçu. Ces asservissements comprennent un asservissement de code, opérant par corrélation entre le signal utile et la réplique locale de code, et un asservissement de porteuse, qui travaille à l'aide d'un signal d'écart de fréquence et de phase entre la porteuse présente dans le signal utile et ladite image de porteuse.

Un tel module à coïncidence peut fournir une indication sur le bon fonctionnement de ses asservissements. On sait en tenir compte d'une part pour le choix de signaux radio-électriques incidents qui donnent des résultats satisfaisants, d'autre part au niveau de l'exploitation des données de calage temporel.

Selon un aspect de l'invention, le dispositif récepteur comprend en outre des moyens capables d'effectuer une transformation de Fourier recevant un signal représentatif de l'écart de fréquence et phase de porteuse. A partir de la transformée de Fourier, des moyens de décision peuvent invalider au moins partiellement les données de calage temporel, en particulier lorsque la transformation de Fourier indique la présence d'énergie en dehors du voisinage d'une raie centrale, cette dernière correspondant à la coïncidence.

On précisera plus loin différentes caractéristiques plus détaillées du fonctionnement de cette surveillance fréquentielle.

Dans un mode de réalisation préférentiel du module à coïncidence, les moyens formant mémoire chronométrique comprennent un oscillateur de porteuse pour définir l'image locale de porteuse, un oscillateur de code, et un générateur d'au moins une réplique locale du code. De leur côté, les asservissements de code et de porteuse comprennent une voie de corrélation ponctuelle, comportant une démodulation selon ladite image de porteuse, et fournissant un signal de coïncidence entre la position temporelle du code dans le signal utile et son estimée, et au moins une voie de corrélation différentielle, comportant une démodulation selon ladite image de porteuse, et fournissant un signal d'écart entre la position temporelle du code dans le signal utile et son estimée. Le signal de coïncidence sert de grandeur d'écart pour une boucle de porteuse à verrouillage de phase, laquelle pilote le générateur d'image locale de porteuse; et le signal d'écart de code sert de grandeur d'écart pour une boucle de code à verrouillage de retard, dont la sortie est combinée à celle de la boucle de porteuse à verrouillage de phase, pour piloter le générateur de répliques de code.

Un autre aspect de l'invention, très intéressant en lui-même, est l'analyse "temporelle". Selon celle-ci, on établit une autre indication de la présence de multiples trajets en utilisant le signal d'écart issu d'au moins une voie de corrélation différentielle.

Pour mettre en oeuvre l'analyse temporelle, il est actuellement préféré que chaque module à coïncidence comprenne au moins une seconde voie de corrélation différentielle, possédant un espacement différent de celui de la première. On prévoit alors des moyens pour utiliser le signal d'écart issu de cette seconde voie de corrélation, seul et/ou par sa comparaison (différence) avec le premier signal d'écart, en tant qu'indication de la présence de multiples trajets.

On précisera plus loin différentes caractéristiques plus détaillées du fonctionnement de cette surveillance ou analyse temporelle.

D'autres caractéristiques et avantages de l'invention apparaîtront à l'examen de la description détaillée ci-après, et des dessins annexés, sur lesquels:

- la figure 1 est le schéma de principe général d'un récepteur GPS;
- la figure 2 est le schéma plus détaillé d'un mode de réalisation particulier de récepteur GPS, auquel l'invention peut s'appliquer;
- les figures 3 et 4 illustrent deux détails du récepteur de la figure 2;
- la figure 5 est un schéma équivalent permettant de mieux comprendre la génération des répliques locales appliquées à des corrélateurs dans le récepteur des figures 2 à 4;
- la figure 6 est une vue partielle illustrant l'une des caractéristiques de la présente invention;
- la figure 7 illustre le mécanisme associé à la surveillance fréquentielle selon l'invention;
- les figures 8A-1 à 8G-1 sont des diagrammes fréquentiels illustrant différentes situations de multiples trajets, spéculaires et/ou diffus;

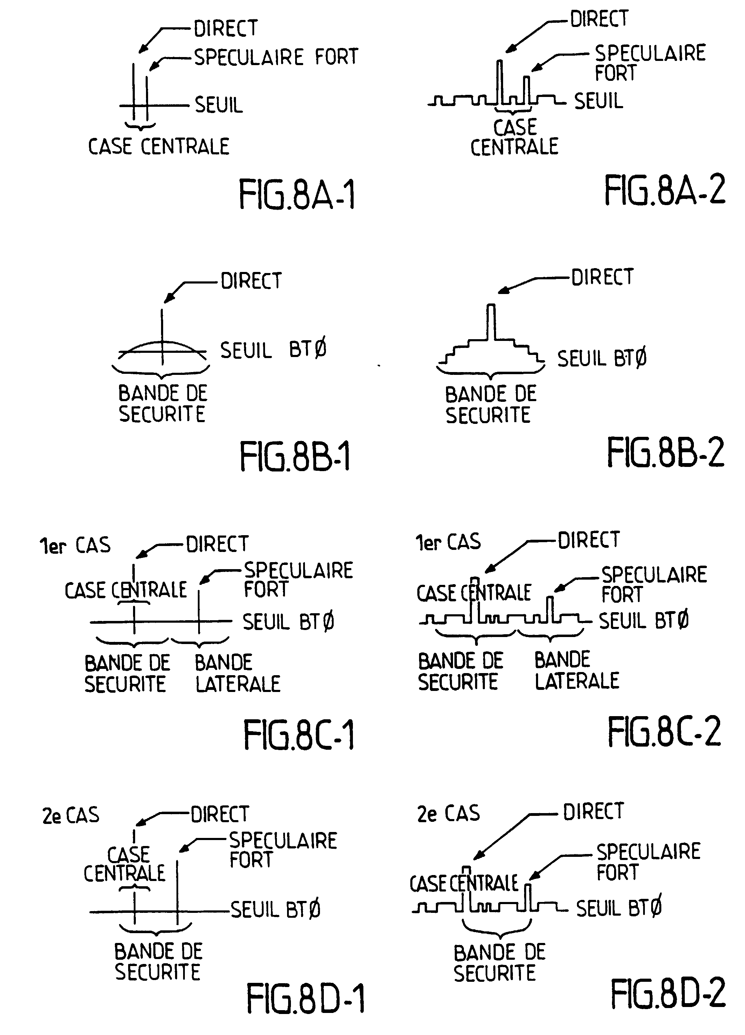

- les figures 8A-2 à 8G-2 sont des diagrammes de transformées de Fourier, équivalents respectivement aux diagrammes des figures 8A-1 à 8G-1;

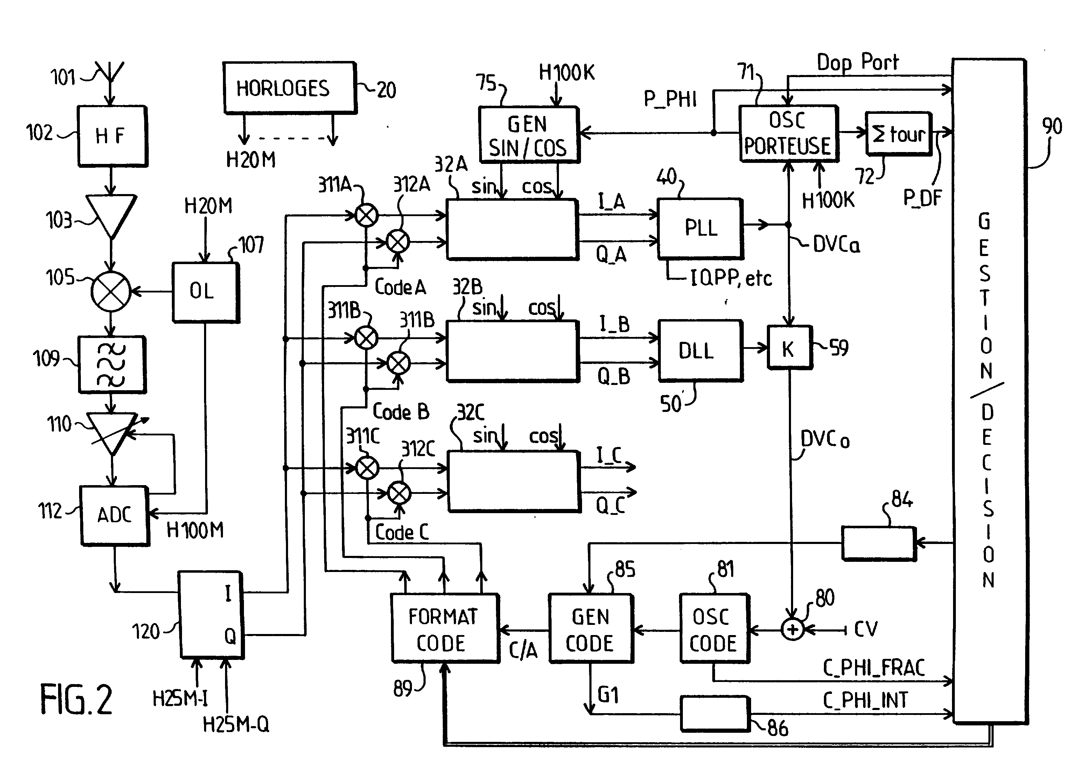

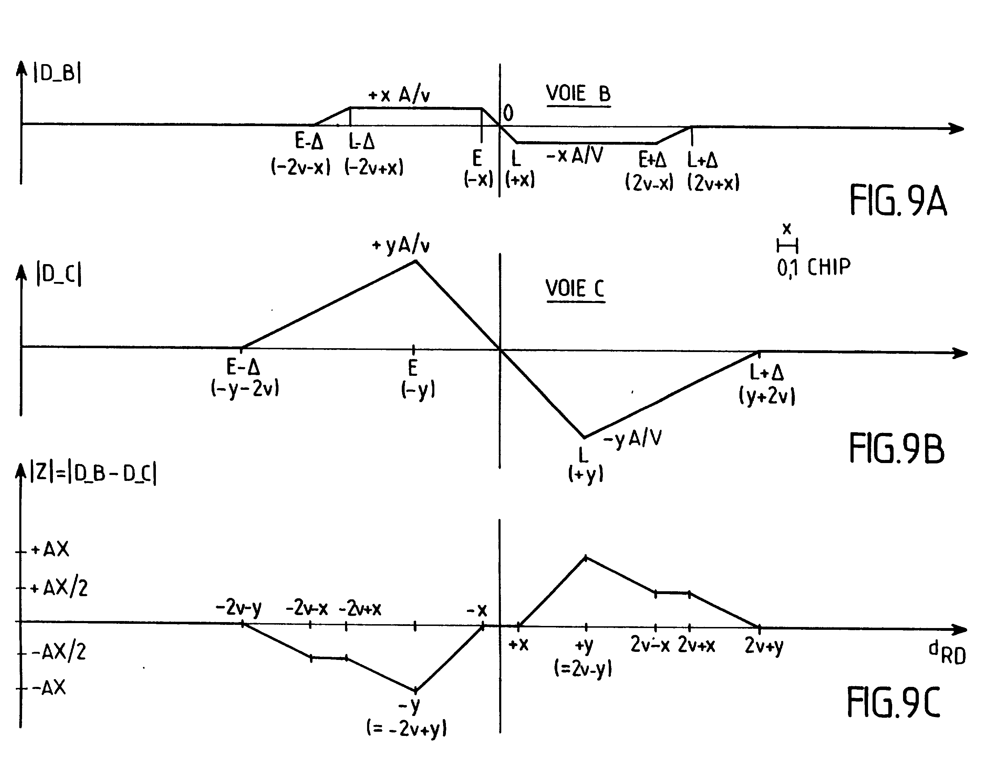

- les figures 9A à 9C sont trois diagrammes temporels illustrant respectivement les sorties des deux voies de corrélation différentielle B et C du récepteur des figures 2 à 4, ayant des espacements différents, et le signal différence entre ces deux sorties ; et
- la figure 10 illustre schématiquement les moyens de base de l'analyse temporelle selon l'invention.

Les dessins annexés sont, pour l'essentiel, de caractère certain. En conséquence, ils pourront non seulement servir à mieux faire comprendre la description, mais aussi contribuer à la définition de l'invention, le cas échéant.

La radionavigation utilise surtout les codes pseudo-aléatoires, bien que l'on puisse concevoir d'autres types de marqueurs temporels assimilables à un bruit. Un code pseudo-aléatoire est un enchaînement répétitif d'une séquence pseudo-aléatoire. On l'appelle aussi code à bruit pseudo-aléatoire, ou bien code PRN (de l'anglais "Pseudo Random Noise").

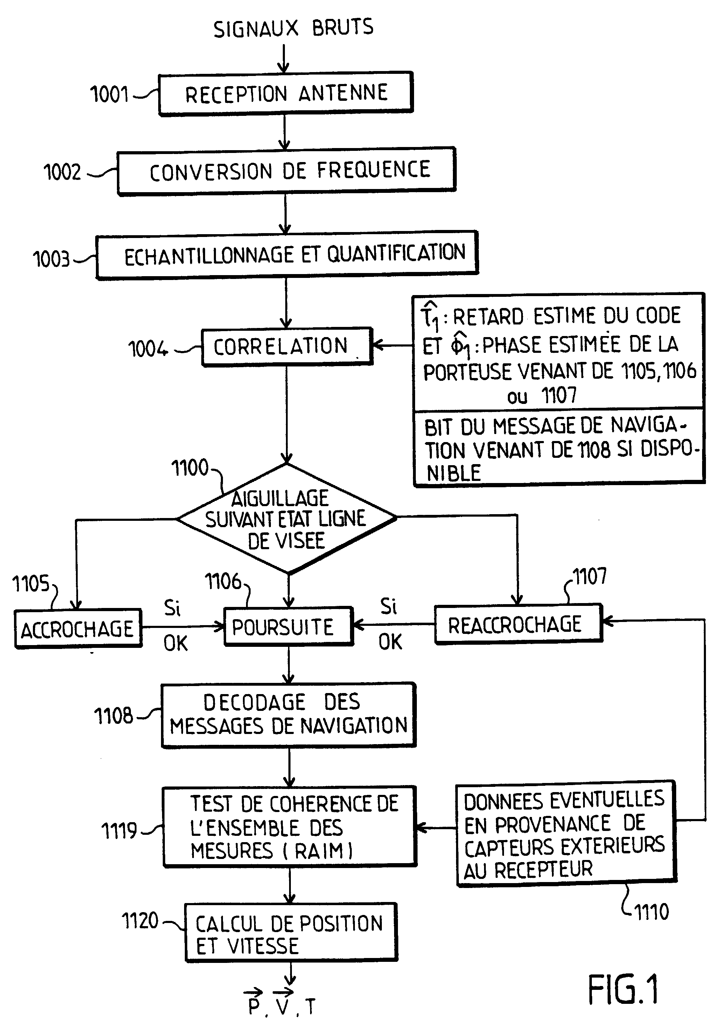

Une façon d'engendrer une séquence pseudo-aléatoire est décrite dans FR-A-2 248 517, notamment en référence à ses figures 1 à 3. Une séquence pseudo-aléatoire peut être considérée comme une suite de bits, parcourue avec une période d'horloge bien définie. L'expression appelée "moment de code", ou plus fréquemment "chip", désigne un bit de la séquence, et, par extension, la durée (Dmc) d'un tel bit.

Une séquence pseudo-aléatoire possède la propriété suivante: sa fonction d'autocorrélation est nulle, sauf au voisinage du décalage temporel nul, où elle prend une allure triangulaire, avec un maximum en cas de synchronisme. La largeur de la base du triangle est de +/- Dmc (voir la figure 13A de FR-A-2 248 517 et la description correspondante). La valeur zéro indique un niveau de réjection qui dépend de la longueur du code. Il en découle que l'on peut engendrer une variété de séquences pseudo-aléatoires de même durée ou "époque" (Dprn), et dont les fonctions d'intercorrélation sont nulles.

Dans le système GPS, différents satellites émettent des porteuses, à une fréquence d'environ 1 gigahertz, modulées par des codes pseudo-aléatoires respectifs, et spécifiques à la fois du satellite et de la fréquence porteuse. Plus précisément, un satellite donné émet actuellement deux porteuses, munies de codes PRN respectifs notés "C/A" (pour "Coarse Acquisition" ou "Clear Acquisition"), et "P" (pour "Precise"). Le premier code C/A est public, alors que le second code noté P, présente une version notée P(Y), intrinsèquement plus précise que le code C/A, mais soumise à un encryptage qui reste confidentiel. La polarisation de l'onde porteuse est circulaire droite.

Comme les récepteurs GPS d'aujourd'hui utilisent surtout le code "C/A", non brouillé, la suite de cette description est limitée à ce code et à la porteuse correspondante, à 1575,42 MHz, qui comporte deux modulations :

- une modulation numérique rapide par inversion de phase (BPSK pour Bi-Phase Shift Keying) selon un code pseudo-aléatoire spécifique de 1023 bits, pulsé à 1,023 MHz, avec Dprn = 1 ms, et
- une modulation numérique beaucoup plus lente (50 Hz) définissant des données d'état du satellite, que l'on appelle "message de navigation".

Il est clair que l'invention ne se limite pas à l'application au seul code C/A.

Les satellites GPS ont une référence de temps commune. Le message de navigation d'un satellite ("éphémérides" et "almanachs") comprend notamment la dérive de son horloge propre (par rapport à une référence de temps), et les éléments nécessaires pour calculer sa position (paramètres d'orbite). En bref, les paramètres de leur orbite étant connus, les satellites sont à considérer comme des postes émetteurs dont les positions sont déterminables.

Le schéma synoptique général d'un récepteur GPS est donné sur la figure 1. A partir des ondes électromagnétiques reçues de différents satellites GPS (signaux bruts), le bloc 1001 réalise la réception proprement dite, qui convertit les ondes en signaux électriques. Viennent ensuite un bloc fonctionnel 1002 de conversion de fréquence, puis un bloc fonctionnel 1003, qui correspond à l'échantillonnage et à la quantification.

Le bloc 1004 correspond aux corrélations, ainsi qu'aux autres mesures de temps et démodulations effectuées sur la porteuse. A ce stade, une corrélation du code reçu avec la réplique locale du générateur de code correspondant au satellite à acquérir (engendrée sur la base d'une horloge locale) va permettre de déterminer le temps d'arrivée de l'onde reçue, et de retrouver la modulation lente qu'elle porte. En fait, si les deux codes d'entrée du corrélateur sont en coïncidence ou presque (à l'intérieur de la réponse triangulaire précitée), on obtient une tension en sortie; sinon, la sortie du corrélateur est nulle, c'est à dire du bruit. Et c'est en accumulant cette tension pendant un certain temps que l'on obtient une information significative sur la coïncidence (compte-tenu du fait que le signal reçu est au dessous du bruit dans la bande d'entrée du récepteur), et que l'on peut retrouver le message de navigation. Comme l'opération de corrélation se trouve ainsi étalée dans le temps, de tels systèmes se contentent d'une puissance d'émission faible, correspondant à un niveau de réception situé au dessous du niveau de bruit.

En pratique, le bloc 1004 comporte deux boucles d'asservissement. Une boucle d'asservissement de porteuse "poursuit" la fréquence et la phase de la porteuse, telle que reçue. Une boucle d'asservissement de code "poursuit" le synchronisme entre le code reçu et la réplique locale correspondante.

La boucle de porteuse mémorise donc la phase totale estimée $\Phi_i$ (phi majuscule) de la porteuse. L'expression "phase totale" comprend ici le décalage de phase subi par la porteuse pendant le temps de trajet des ondes et l'effet Doppler dû au mouvement relatif satellite/récepteur. En fait, il est plus commode de séparer la phase totale en un écart de fréquence $f_i$, et une phase $\phi_i$ (phi minuscule), conformément au fonctionnement d'une boucle de porteuse du second ordre, qui réalise d'abord l'accrochage en fréquence, puis l'accrochage en phase. L'écart de fréquence $f_i$ correspond à un décalage Doppler, donc à une vitesse relative; c'est pourquoi on l'appelle aussi "vitesse".

La boucle de code mémorise un retard estimé du code $\hat{\tau}_i$ par rapport à l'horloge locale. L'ambiguïté, égale à une longueur de code (Dprn = 1 ms, soit environ 300 km), est levée à l'aide du message de navigation, et éventuellement d'une estimée de position disponible par ailleurs.

De façon connue, le récepteur peut alors prendre différents états, ce qui correspond à l'unité fonctionnelle de test 1100 dite "aiguillage suivant l'état de la ligne de visée". Dans une phase d'initialisation complète, on réalisera d'abord en 1105 l'accrochage ou acquisition.

Ceci fait, on pourra passer à la phase de poursuite 1106. Par contre, si un accrochage a déjà été établi, et que l'on est déjà passé antérieurement en phase de poursuite, mais que le synchronisme a été perdu, on pourra alors réaliser un réaccrochage comme indiqué en 1107. Ce réaccrochage peut tenir compte de données en provenance de capteurs extérieurs au récepteur GPS, comme indiqué en 1110.

Lorsqu'on est en phase de poursuite 1106, il est possible de réaliser le décodage des messages de navigation (bloc 1108). En 1119 survient un test de cohérence de l'ensemble des mesures, qui peut tenir compte aussi de données en provenance des capteurs extérieurs au récepteur (1110). Ce test de cohérence fait avantageusement intervenir les techniques dites RAIM (Receiver Autonomous Integrity Monitoring). Ces techniques appliquées dans le cas de mesures redondantes, ont pour objet de déterminer les lignes de visée qui risquent d'entraîner une erreur de position, et de les écarter du traitement de détermination de position. Elles sont décrites notamment dans le Journal of the Institute of Navigation :

- vol.35 N°4, hiver 88-89, article "Navigation System Integrity Monitoring Using Redundant Measurements" de Mark A. STURZA,
- vol.35 N°2, été 88, article "Autonomous GPS Integrity Monitoring Using the Pseudorange Residual" de BRADFORD W. PARKINSON et Penina AXELRAD, et
- vol.39 N°3, automne 92, article "A Baseline GPS RAIM Scheme and a Note on the Equivalence of Three RAIM Methods" de R. GROVER BROWN.

On en trouve également une description dans l'Appendix "O" de "Minimum Operational Performance of Standards for GPS/Wide Area Augmentation System Airborne Equipement", RTCA, Doc N° RTCA/DO-229, January 16,1996, prepared by SC-159, dont l'Appendix "E" donne les références d'autres articles.

A partir des instants de réception des ondes obtenus en 1001, le bloc 1120 applique des techniques du genre triangulation, qui permettent de déterminer la position et la vitesse du récepteur GPS. On obtient donc un vecteur de position P et un vecteur vitesse V. Les coordonnées de position sont définies par rapport à un ellipsoïde de référence dit WGS 84 (World Geodetic System), et différent du géoïde.

Plusieurs mesures de temps de trajet (au moins quatre) sont nécessaires pour déterminer la position du récepteur. On travaille en principe avec redondance, pour augmenter la précision, et supporter plus facilement les conséquences de la perte de contact avec l'un des satellites. Pour déterminer la position du récepteur, le bloc 1120 doit également calculer une estimation du "biais d'horloge", c'est à dire du décalage de temps entre l'horloge du récepteur et le "temps GPS", à savoir le temps général (de référence) du système commun à tous les satellites.

On dispose déjà de certains moyens pour tenter de s'affranchir des signaux parasites que créent les multiples trajets.

Une première classe de moyens concerne les aériens. Une bonne réjection des signaux parasites en polarisation inverse peut être procurée par des antennes de type hélicoïdal, qui atténuent la puissance des multiples trajets ayant subi un nombre impair de réflexions. Des plans masses ou des plans absorbants peuvent être disposés sous les antennes pour atténuer l'effet des réflexions venant du sol, ou bien dans une situation d'incidence rasante. On connaît aussi des antennes à structure annulaire, plus précisément dénommées "choke ring", et qui constituent des systèmes alvéolaires formant pièges. On peut encore utiliser des antennes à formation de faisceaux, à diagramme directif orientable, afin d'écarter des multiples trajets indésirés, ou du moins de les atténuer. Sont encore connus des systèmes multi-antennes qui se fondent sur la décorrélation spatiale des multiples trajets, afin d'éliminer ceux-ci.

Ces différentes solutions peuvent être mises en oeuvre dans les dispositifs ici décrits, mais ne constituent pas en eux-mêmes le coeur de la présente invention.

On cherche également à réduire l'effet des multiples trajets au niveau de la conception des récepteurs eux-mêmes.

Le procédé dit "harmonique" exploite la divergence code/phase observée sur une ligne de visée (la ligne de visée est la ligne qui joint la ligne du trajet effectif le plus court entre un satellite et le récepteur). Cette technique, mise en oeuvre par la Demanderesse, est fondée sur le fait que l'erreur observée sur la porteuse est plus faible que celle que l'on observe sur le code. En procédant à un lissage du code par la phase, on peut observer l'écart code-phase, et en déduire la présence des multiples trajets. En effet, une augmentation de la moyenne de l'écart code-phase observée sur une ligne de visée est symptomatique de la présence de multiples trajets, ce qui peut d'ailleurs servir à titre complémentaire dans la mise en oeuvre de la présente invention.

Le document FR-A-2 698 966 décrit une autre technique consistant à analyser le front avant du pic de corrélation, remarque étant faite que les multiples trajets (physiques) sont toujours en retard sur le trajet direct, et que le front avant est peu ou pas déformé. On obtient ainsi une amélioration du comportement du récepteur.

Il a également été proposé d'exploiter la courbe de corrélation, par analyse de la variation de sa pente, et par utilisation de multiples corrélateurs s'appuyant sur la déformation de cette courbe par rapport à sa forme canonique. Cette technique, décrite notamment dans le Brevet US-A-5 390 207, donne des résultats intéressants lorsqu'un nombre restreint de multiples trajets existe, avec un état suffisamment stationnaire.

Par ailleurs, il a également été proposé de réduire l'espacement de la corrélation différentielle dans une boucle DLL qui travaille en phase de poursuite, comme indiqué par exemple dans le fascicule de Brevet EP-A-0 488 739.

Les procédés ci-dessus visent à détecter les trajets multiples, et, pour certains, à s'en affranchir partiellement.

La Demanderesse a observé que, si ces procédés connus conviennent avec certaines classes bien répertoriées de trajets multiples, par contre ils ne sont pas d'application générale, et risquent même dans certains cas d'avoir un effet opposé à celui recherché, en présence de trajets multiples qui n'appartiennent pas aux classes traitées avec succès. A côté de cela, en multipliant les corrélateurs (qui sont à multiplier en outre par le nombre de satellites traités), on complique considérablement le récepteur.

En conséquence, après avoir étudié en profondeur le phénomène en cause, la Demanderesse a préféré se focaliser sur des aménagements du récepteur qui permettent la détection de trajets multiples, afin d'empêcher le récepteur d'utiliser des mesures erronées pour se localiser (ou bien d'utiliser ces mesures erronées à d'autres fins). La redondance des mesures disponibles et la probabilité faible d'observer des trajets multiples simultanément sur plusieurs lignes de visée permettent donc, avec un investissement matériel minime, d'accroître de façon significative la qualité du positionnement.

Bien que l'invention puisse s'appliquer à différentes structures de récepteurs GPS, elle s'harmonise particulièrement bien avec un récepteur à trois voies de corrélation, que l'on décrira dès maintenant. La figure 2 est un schéma plus détaillé d'un tel récepteur, limité à un canal de satellite pour simplifier.

Le récepteur commence par une antenne 101 et un étage de haute fréquence 102 (bloc 1001 de la figure 1). Vient ensuite un amplificateur 103, l'ensemble opérant sur une bande qui est ici de 20 MHz, à une fréquence de 1575,42 MHz, dans l'exemple choisi. De façon générale, la largeur de bande en haute fréquence est comprise entre environ 2 Mhz et quelques dizaines de MHz.

Un mélangeur 105 reçoit la sortie de l'amplificateur 103, ainsi qu'un signal local de 1400 MHz d'un oscillateur local 107; il fournit en sortie un signal utile analogique d'une fréquence de 175,42 MHz. Ce signal est appliqué à un filtre passe-bande 109, centré sur 175,42 MHz, avec une réponse de +/- 10 MHz à -3 dB, et +/- 25 MHz à -15 dB. Le bloc 1002 de la figure 1 correspond à ces organes 104 à 109, auxquels on peut ajouter l'amplificateur 103.

Le filtre 109 est suivi d'un amplificateur 110, puis d'un convertisseur analogique numérique 112, dont la sortie est le signal utile, cette fois sous forme numérique. L'amplificateur 110 est de préférence à gain variable, son gain étant commandé en fonction du niveau de signal à la conversion, de façon à optimiser le nombre de chiffres significatifs en sortie du convertisseur (2 bits).

Un générateur de signaux d'horloge 20 produit les différents signaux d'horloges utiles au récepteur, et qui sont, sauf mention contraire, tous liés entre eux. Ainsi ce générateur 20 fournit par exemple une fréquence de 20 MHz, qui sert à piloter (par multiplication) l'oscillateur local 107. Ce dernier comporte un oscillateur commandé en tension (VCO) opérant à 20 MHz, et muni d'une boucle à verrouillage de phase (PLL) sur cette fréquence pilote de 20 MHz. A partir de la sortie de l'oscillateur, des générateurs de fréquence fournissent la fréquence de 100 MHz qui cadence l'échantillonnage au sein du convertisseur analogique numérique 112, et les autres fréquences utiles de 1400 MHz et 25 MHz, essentiellement.

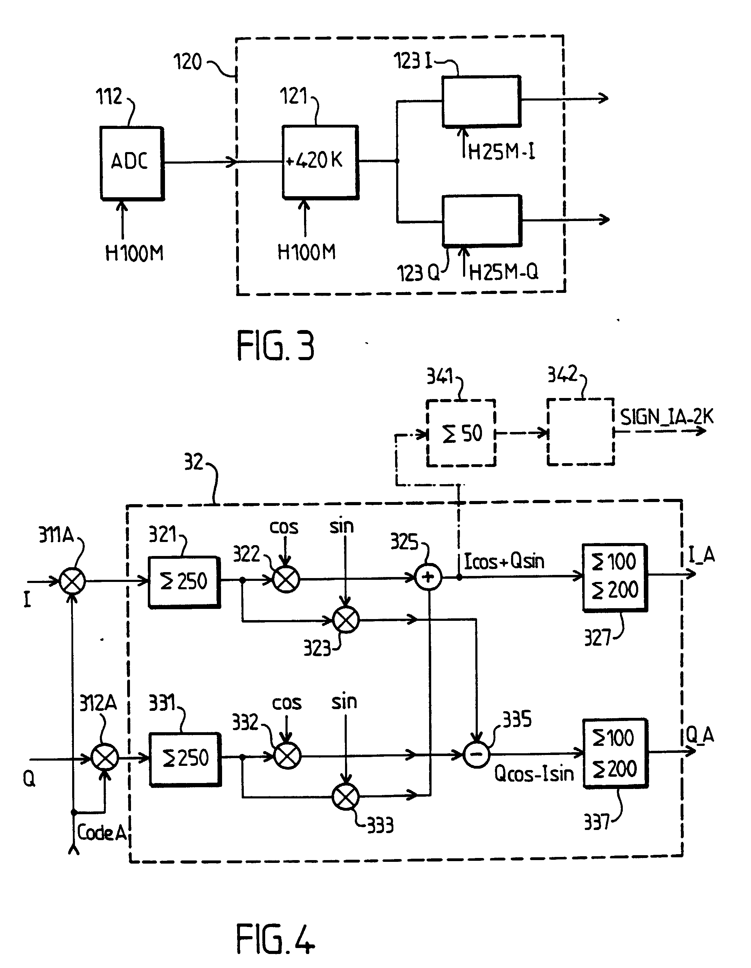

Le signal analogique possède une fréquence de 175,42 MHz. Il est sous-échantillonné à 100 MHz, ce qui équivaut à une transposition de fréquence à 200 MHz. La sortie du convertisseur analogique-numérique 112 peut donc être considérée comme un signal numérique centré sur 24,58 MHz. Exprimé sur 2 bits, ce signal numérique, qui comporte ici 4 échantillons par période, est appliqué à un échantillonneur complexe 120, détaillé sur la figure 3.

En tête, l'échantillonneur comporte en 121 un transposeur de fréquence à bande latérale unique de 420 Kilohertz, ramenant la fréquence de travail à exactement 25 MHz (24,58+0,42). Cadencé en sortie par la fréquence H100M (le même signal d'horloge que pour le convertisseur 112), le signal issu de ce bloc 121 est appliqué à deux opérateurs 123I et 123Q cadencés respectivement par des horloges H25M-I et H25M-Q, à 25 MHz, en quadrature l'une de l'autre. Ces opérateurs 123 sont agencés pour fournir des signaux numériques en bande de base, exprimés sur 4 bits, à savoir respectivement un signal en phase (sortie I), et un signal en quadrature (sortie Q). Par analogie avec les nombres complexes, on parle aussi des parties réelle I et imaginaire Q.

Le bloc 1003 de la figure 1 comprend l'ensemble qui va du convertisseur analogique/numérique 112, précédé de son amplificateur à gain variable 110, jusqu'à l'échantillonneur numérique 120.

Les deux sorties I et Q de l'échantillonneur numérique complexe 120 sont distribuées à trois voies (bloc 1004 de la figure 1). Ces trois voies sont distinguées par les lettres A, B et C, en correspondance des trois corrélations également notées A, B et C, auxquelles sont associés trois décalages possibles du code pseudo-aléatoire déterminant le satellite à poursuivre. On verra plus loin que la voie B est "différentielle", c'est à dire qu'elle travaille sur la différence entre deux répliques d'un même code pseudo-aléatoire, espacées temporellement l'une de l'autre autour du décalage associé à cette voie B. La voie C peut être normale (code C1), ou bien différentielle (code C2).

La figure 4 détaille à titre d'exemple la voie A, qui apparaît en haut sur la figure 2. Les signaux en phase I et en quadrature Q sont appliqués respectivement à deux corrélateurs numériques 311A et 312A, recevant par ailleurs le code A, et dont les sorties vont conjointement vers un démodulateur de porteuse 32A.

Pour le signal I (partie réelle), la sortie du corrélateur 311A (4 bits) est appliquée d'abord à un sommateur 321, qui fait un cumul sur 250 échantillons numériques (9 bits). Ce cumul est appliqué à deux multiplieurs numériques 322 et 323, recevant par ailleurs respectivement les informations COSinus et SINus de la phase de porteuse (P_PHI), exprimées chacune sur 6 bits. Les résultats respectifs, notés Icos et Isin, sont exprimés sur 9 bits. Le schéma est le même pour le signal Q (partie imaginaire), avec le corrélateur 312A (4 bits), le sommateur 331, et les deux multiplieurs numériques 332 et 333, dont les résultats respectifs, notés Qcos et Qsin, sont exprimés sur 9 bits.

A partir de la, les sorties principales de la voie A, en phase et en quadrature, comprennent un signal I_A, fourni par un additionneur numérique 325 qui construit Icos + Qsin, sur 10 bits, ce qu'un sommateur 327 accumule sur 16 bits, et un signal Q_A, fourni par un soustracteur numérique 335 qui construit Qcos - Isin, sur 10 bits, ce qu'un sommateur 337 accumule sur 16 bits.

Les accumulations en 327 et 337 se font sur 100 ou 200 échantillons, de façon commutable, ce qui correspond à un temps d'intégration de 1 ou 2 millisecondes (base de temps à 1 kHz ou 500 Hz). En effet, partant d'environ 25 MHz, on a réalisé des cumuls sur 250 fois 100 ou 200 échantillons numériques.

Les deux autres voies de la figure 2 sont de structure identique à ce qui vient d'être décrit, et portent les mêmes références numériques, mais avec les suffixes B et C, respectivement, la où les corrélateurs reçoivent le code B et le code C.

En outre, pour la voie A seulement (trait tireté sur la figure 4), la sortie de l'additionneur 325 est appliquée à un sommateur 341, opérant sur 50 échantillons. Le bit de signe de la sortie du sommateur 341, disponible toutes les 0,5 ms, est mémorisé et sérialisé dans la mémoire 342 pour fournir 2 ou 4 informations successives de signe, selon que l'on travaille à 1 kHz (1 ms) ou 500 Hz (2 ms). Cette information de signe, notée SIGN_IA_2K, correspond à la modulation lente porteuse des données d'état, "éphéméride" et "almanach", formant le message de navigation.

Les couples de signaux I_A et Q_A, I_B et Q_B, I_C et Q_C (ou leurs modules, ou le carré de ceux-ci), ainsi que le signal SIGN_IA_2K vont tous à l'unité de gestion/décision 90 (liaisons non représentées pour éviter de surcharger le dessin de la figure 2). En outre :

-   les signaux I_A et Q_A vont à un étage de boucle de porteuse 40, qui est de préférence du type PLL (phase lock loop), et dont la sortie DVCa (écart de vitesse porteuse), sur 16 bits, va, dans la phase de poursuite du signal, d'une part vers un oscillateur de porteuse 71, à commande numérique, d'autre part vers un étage 59 qui définit un écart de vitesse code DVCo, que l'on décrira plus loin ;

- les sorties I_B et Q_B du démodulateur de porteuse 32B de la voie B aboutissent à un étage de boucle de code 50, de préférence du type DLL ("delay lock loop").

L'oscillateur de porteuse 71 opère à la cadence H100K (100 kHz). Sa sortie P_PHI, représentative de la phase de porteuse, sur 7 bits, alimente un générateur sinus-cosinus 75, également pulsé à la cadence H100K, et fournissant sur 6 bits les signaux respectifs COSinus et SINus de la phase de porteuse, qui vont vers les démodulateurs de porteuse 32 déjà cités.

A partir du signal DVCa, l'oscillateur de porteuse 71 ajuste sa phase P_PHI, mais aussi, chaque fois que celle-ci change modulo 2 π, en fournissant une information d'incrément ou décrément d'un tour de phase à un circuit 72 qui accumule alors, sur 16 bits, le nombre de tours P_DF que fait la porteuse, c'est à dire la partie entière de sa phase totale. La partie fractionnaire de la phase totale, sur 16 bits, est la phase de porteuse P_PHI précitée. L'ensemble P_DF et P_PHI va à l'unité de gestion/décision 90.

L'oscillateur de code 81, également un oscillateur à commande numérique, est pulsé par une horloge à la fréquence H25M (25 MHz). Sa sortie, sur 1 bit, alimente un générateur de code 85. IL fournit également une information de fraction de chip C_PHI (ou "phase code"), sur 16 bits, qui est retournée à l'unité de gestion-décision 90 (exploitation).

La commande numérique de l'oscillateur de code 81 est définie sur 32 bits par la sortie d'un additionneur 80, dont une entrée reçoit un signal CV, à une fréquence de 1,023 MHz, qui est la cadence de base du code pseudo-aléatoire. L'autre entrée de cet additionneur 80 reçoit une correction (aide en vitesse), provenant de l'unité 59 déjà mentionnée. Cette correction DVCo correspond à la sortie de la boucle de code DLL 50, "aidée" par la sortie de la boucle de porteuse PLL 40. L'unité 59 permet de convertir la correction DVCa dans la même unité de temps que celle de la correction DVCo. Le rapport de conversion K de l'unité 59 correspond au rapport des fréquences respectives code et porteuse, soit 1540 (1575,45 divisé par 1,023).

Pour sa part, le générateur de code 85 reçoit une information de calage temporel en provenance d'une table 84, remplie sous le contrôle de l'unité de gestion-décision 90 en fonction du numéro du code PRN relatif au satellite concerné.

Il fournit un code de base C/A, relatif à l'émetteur concerné (fréquence porteuse), sur une sortie allant vers l'unité de format de code 89. La partie fractionnaire C_PHI_FRAC de l'information "phase code" est lue en sortie de l'oscillateur de code, comme déjà décrit. En outre, le générateur de code 85 fournit une information dite "registre G1", représentative de son calage propre, et qui aboutit à l'unité 86. Celle-ci convertit l'information du registre G1 en un N° ou rang de chip (1 parmi 1023), qui représente la partie entière C_PHI_INT de l'information appelée "phase code" C_PHI.

A partir du code de base C/A généré par le circuit 85, on va fabriquer les répliques A, B, C de ce code correspondant aux trois voies de corrélation décrites précédemment. Ces répliques permettent de piloter les corrélateurs correspondants 311A à 311C; l'une, voie A, est dite ponctuelle; les deux autres B et C sont dites E-L ("Early minus Late"), avec des espacements différents.

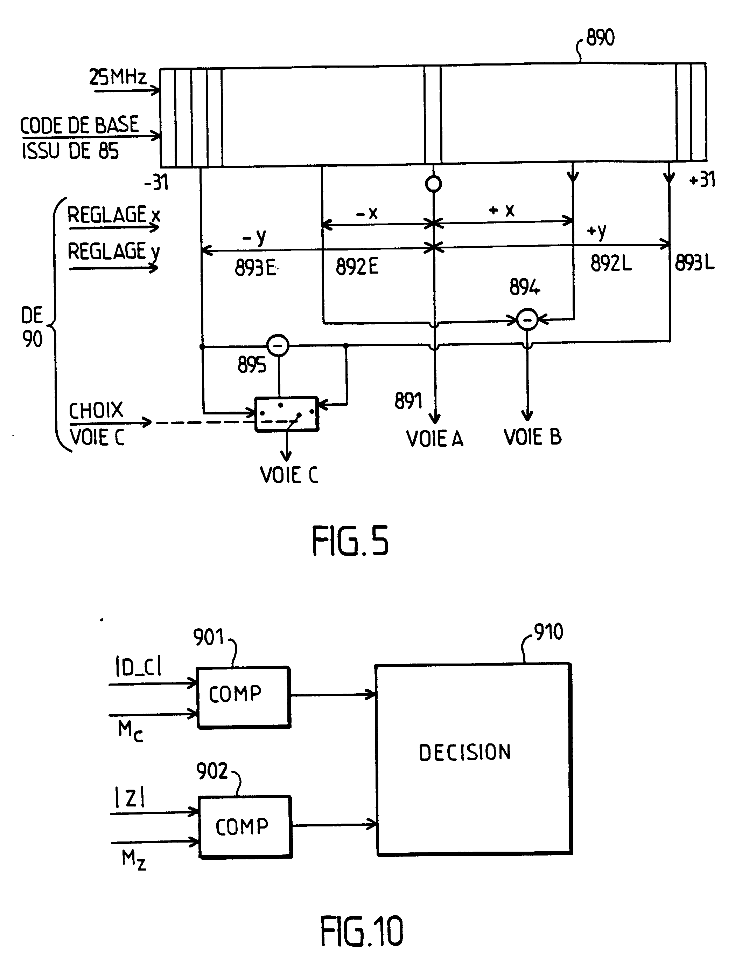

Cette génération des répliques est réalisée dans l'unité de formatage des codes 89. Le fonctionnement de ce formatage correspond à celui d'une ligne à retard dont le schéma est donné en figure 5.

Un registre à décalage 890, de 63 cases (-31,0,+31), est alimenté par le code issu du générateur de code 85, échantillonné à 25 MHz. Chaque case du registre 890 représente donc une période de cette horloge à 25 MHz, soit 40 ns (nanosecondes), ou encore 1/25 chip. La sortie de 5 cases parmi les 63 possibles va permettre de générer les répliques A, B et C.

Une sortie pré-programmée 891, issue de la case centrale 0, représentera l'entrée de la voie ponctuelle centrée, ou voie A, codée sur 1 bit.

Les autres sorties 892 E et 892 L, ainsi que 893 E et 893 L, sont programmables deux à deux symétriquement par rapport à la case 0. Elles sont combinées dans des opérateurs logiques 894 et 895, qui effectuent une soustraction logique et une division par deux, et fournissent respectivement les entrées des corrélateurs des voies B et C, codées sur 2 bits.

Ainsi, la réplique locale de la voie B correspond à une position des sorties 892 E et 892 L à +/- x fractions de 1/25 chip, d'où un écartement ou espacement de 2.x/25 chip (entre les deux codes Avance E et Retard L dont on fait la différence).

De son côté, la réplique locale de la voie C correspond à une position des sorties 893 E et 893 L à +/- y fractions de 1/25 chip, d'où un écartement ou espacement de 2.y/25 chip.

Les valeurs x et y sont programmables par les entrées x et y du bloc 89 de la figure 2 en provenance de l'unité de gestion-décision 90, avec:

- x variable de 1 à 15, codée sur 4 bits, et
- y variable de 1 à 32, codée sur 5 bits et y supérieur à x.

La voie C peut être formée soit par la sortie, dite C2, de 895 (de la forme 893 E moins 893 L), soit par la sortie de 893 E ou bien celle de 893 L (sorties indifféremment notées C1).

On notera que les codes A, B et C2 sont définis conjointement, et avec le même centre.

Comme indiqué plus haut, lorsque l'on corrèle le signal reçu avec une réplique locale du code PRN attendu (voie A), la réponse du corrélateur possède une allure triangulaire, avec un maximum au synchronisme, et la largeur de la base du triangle est de +/- Dmc, ou +/- 1 chip.

Lorsque l'on corrèle le signal reçu avec la différence entre deux répliques locales, espacées, du code PRN attendu (répliques "différentielles" B ou C2), le résultat de la corrélation (elle aussi "différentielle") correspond à ce que donnerait la différence entre deux corrélations faites respectivement avec les deux composantes de la réplique différentielle: par exemple, la sortie du corrélateur de la voie B avec la réplique locale (892 E - 892 L) correspond à la différence entre les sorties de deux corrélations faites respectivement avec les répliques locales disponibles en 892 E et 892 L. L'écart temporel entre 892 E et 892 L (par exemple) est nommé espacement, ou fenêtre d'écartométrie, ou encore écartomètre. Les deux corrélations dont on construit ainsi la différence ont chacune une réponse triangulaire de largeur +/- 1 chip à la base. Dans la mesure où l'espacement est inférieur à 2 chips, elles vont se composer. Ainsi, la figure 9A illustre la réponse de la voie B, avec un espacement 2x = 0,2 chip (cette valeur de x est prise à titre d'exemple), tandis que la figure 9B illustre la réponse de la voie C, avec un espacement 2y = 1 chip. Sur ces figures, Δ symbolise la durée d'un chip, notée Dmc (=2.v) dans la description, alors que le coefficient A est une grandeur liée à l'amplitude du signal reçu. Dans les deux cas, cette composition fournit, au centre, une zone de réponse sensiblement linéaire, qui passe par zéro au point milieu de la fenêtre de corrélation différentielle. C'est cette zone qui permet le pilotage d'un asservissement temporel, comme le fait la voie B. Normalement (Figure 9A), on observe de part et d'autre de cette zone centrale deux paliers, de durée - d + Dmc, où d est l'espacement de l'écartomètre ; la durée est donc 2(v-x) sur la figure 9A. Sur la figure 9B, le palier se réduit à un point car 2(v-y) = 0, du fait que v=y.

A l'initialisation du récepteur, une phase connue dite acquisition ou accrochage, permet d'amener le code ponctuel de la voie A suffisamment près du synchronisme avec le signal reçu pour obtenir une réponse (un pic) dans les corrélateurs 311A et 312A, et, par conséquent, des signaux I_A et Q_A se trouvant au dessus du bruit. Ceci peut se faire par recherche systématique, et/ou en tenant compte d'informations qui sont déjà disponibles, de source externe ou bien du fait du fonctionnement antérieur du récepteur GPS (ré-accrochage). On peut diminuer le temps de recherche systématique en utilisant en parallèle le code A, ainsi que l'une et/ou l'autre des versions 893 E et 893 L du code C (éventuellement aménager la voie B, pour lui faire jouer à ce stade le même rôle que la voie C). Cette recherche systématique peut se faire de toutes les manières connues de l'homme du métier.

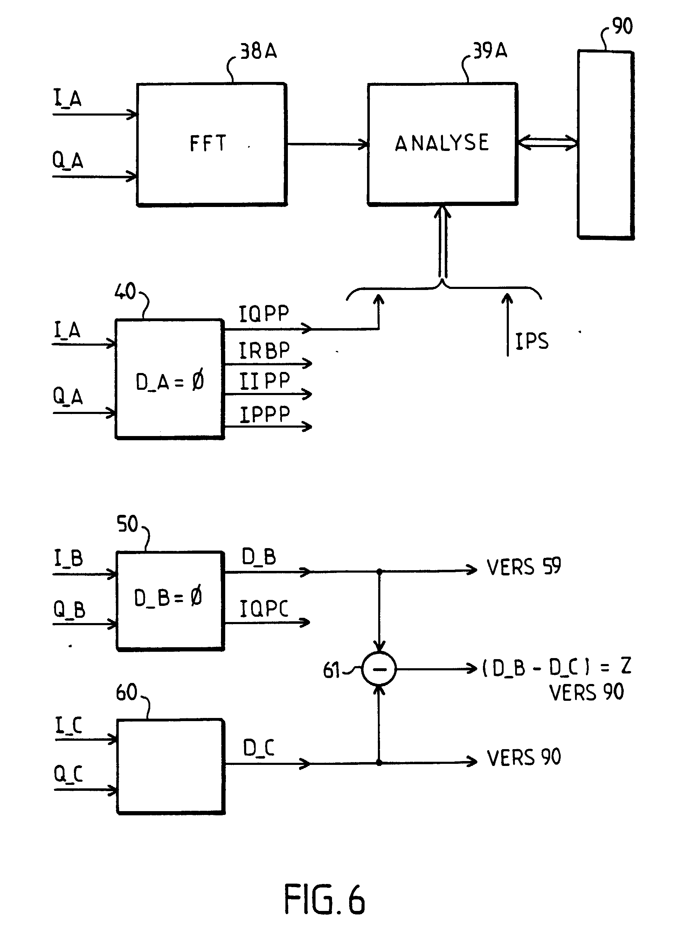

Ensuite, on entre en phase de poursuite, avec les codes A, B et C2. Un signal D_B, dont on reparlera plus loin en référence à la figure 6 (sortie de l'étage 50 d'écartomètrie avec boucle à verrouillage de phase PLL), pilote la boucle de code jusqu'à obtenir un calage temporel à +/- un dixième de chip, ou mieux, par la voie B. Le positionnement grossier de la boucle de code (à +/- 1 chip) peut être trouvé à l'aide d'un signal d'écart D_C, dont on reparlera également plus loin en référence à la figure 6 (sortie de l'étage 60 d'écartomètrie).

En régime permanent, l'asservissement de poursuite s'effectue avec les codes A et B. Sous l'effet de l'asservissement de code de la voie B, la réponse de la voie A (sortie des accumulateurs 321A et 331A) est à un niveau d'autant plus élevé que le synchronisme entre le code reçu et le code A, ou code ponctuel, est plus précis. Ensuite, les multiplieurs 322A, 323A, d'une part, ainsi que 332A, 333A, d'autre part réalisent la démodulation par la phase de la porteuse. Les recombinaisons réalisées par les organes 325 et 335 donnent l'écart de phase, en ses composantes exactes, compte-tenu de la séparation en deux voies complexes I et Q. Après accumulation en 327A et 337A, les signaux I_A et Q_A attaquent l'étage PLL de boucle de porteuse 40, qui est par exemple une boucle du 2° ordre, avec une bande passante de 30 Hz. Sa sortie est représentative de l'écart de phase de porteuse, et sert de commande numérique pour ajuster l'oscillateur 71, dont la fréquence de base est H100k (100 kHz). Cet oscillateur 71 forme mémoire de phase totale pour la porteuse, avec:

- une sortie P_PHI de phase modulo 2 pi, appliquée au générateur de cosinus et sinus 75 (sur 7 bits), et à l'unité de gestion/décision 90 (sur 16 bits, pour préserver la finesse du décalage Doppler), et
- une sortie P_DF de nombre de tours, appliquée à l'unité de gestion/décision 90. Ce nombre de tours représente une variation de fréquence.

Rapportées à la fréquence de 100 kHz, ces deux grandeurs P_DF et P_PHI définissent ensemble une mesure fine de l'écart temporel sur la voie A, en utilisant la fréquence porteuse, au voisinage du synchronisme sur le code reçu. Cette mesure fine est appelée pseudo-distance porteuse (ou "pseudo range" porteuse). En phase d'accrochage (acquisition) en boucle ouverte, la valeur de consigne de l'oscillateur de porteuse est fournie par l'unité de gestion/décision 90 en fonction d'un Doppler estimé ("Dop. Port").

En phase de poursuite en boucle fermée, la grandeur d'écart correspondante en sortie de l'étage PLL 40 est appliquée à l'oscillateur de porteuse, ainsi qu'au registre 59 et à l'additionneur numérique 80, pour "aider en vitesse" la boucle de code asservie sur les composantes en phase I_B et en quadrature Q_B de la voie B. La boucle de code est par exemple une boucle du 2° ordre avec une bande passante de 1 Hz, aidée en vitesse par une sortie de la boucle de poursuite porteuse.

En bref, dans un état de poursuite stabilisée (en l'absence de multiples trajets):

- la boucle de porteuse est accrochée en fréquence et en phase, et
- la boucle de code est également accrochée, avec un signal d'écart en principe proche de zéro en sortie de la voie B.

Dans ce qui précède, la phase estimée de la porteuse $\Phi_i$ est une phase totale, c'est-à-dire qu'elle peut comporter un décalage de fréquence d'un certain nombre de tours, comme on l'a vu. Il est donc plus simple de la décomposer en une fréquence $f_i$, et une phase proprement dite, c'est-à-dire modulo $2\pi$, notée $\phi_i$.

Ces paramètres de retard estimé de transmission du code entre le satellite et le récepteur, et de fréquence Doppler (avec phase) estimée dont la porteuse du signal est affectée, doivent permettre de piloter les corrélations afin :

- de détecter la présence d'un signal, ce que fait la voie A, afin de valider les estimations grossières de $\hat{\tau}$ et $\hat{f}$ utilisées dans la phase de recherche,

- toujours à l'aide de la voie A, de commander la boucle de poursuite porteuse, qui est d'abord accrochée en fréquence, puis en phase, dès que l'écart de fréquence entre le décalage Doppler réel et $\hat{f}$ devient suffisamment faible,

- simultanément à l'accrochage de la boucle de poursuite porteuse, la boucle de poursuite code de la voie B est enclenchée; cette boucle permet de rendre plus fine l'estimation $\hat{\tau}$ de la distance satellite/récepteur. Enfin, cette estimation plus fine $\hat{\tau}$ sera à son tour lissée par l'analyse de phase faite à l'aide de la boucle de porteuse. On entend ici par lisser, par exemple le fait que l'on utilise les valeurs de phase recalées par les valeurs moyennes de distances.

La boucle de poursuite porteuse élabore différents signaux de service relatifs à son état, et transmis à l'unité de gestion/décision 90, en particulier:

- un signal logique IPPP (pour Indice de Poursuite Porteuse en Phase) indiquant que la boucle de porteuse est passée du mode de poursuite en fréquence au mode de poursuite en phase, (au besoin qu'elle reste de façon stable en poursuite en phase),
- un signal logique IRBP (pour Indice de Réjection par la Boucle de Porteuse) indiquant que la réjection effectuée par la boucle de porteuse est correcte. Cet indice est fondé, de préférence, sur l'analyse, selon des critères prédéterminés, des niveaux dans les différentes cases disponibles en sortie de la FFT, au niveau du discriminateur de la boucle de poursuite porteuse. Le critère le plus simple, non limitatif, est que l'énergie soit essentiellement située dans la case centrale (ou généralement la case principale), et non dans les cases adjacentes à celle-ci;

- un signal logique IQPP (pour Indice de Qualité de Phase Porteuse). Cet indice est par exemple fondé sur le fait que le bruit du comparateur de phase de la boucle 40 est ou non acceptable,
- éventuellement, un signal logique IQPC (pour Indice de Qualité de Poursuite Code), indiquant que la boucle de code ne trouve pas son équilibre (situation en principe impossible lorsque la voie B alimente la poursuite distance - sur le code -, via le produit scalaire et la normalisation obtenus à partir de la voie A, comme c'est ici le cas),
- éventuellement aussi, un signal logique ITPP (pour Indice de Traînée en Poursuite Porteuse), indiquant que la boucle de porteuse peine à suivre une forte variation de fréquence du signal incident, due en principe à une forte variation de la composante d'accélération le long de la ligne de visée.

Les récepteurs GPS connus comportent déjà des moyens de décision pour écarter une ligne de visée qui fournit une mesure douteuse. La décision d'invalider une ligne de visée se fonde par exemple sur le fait que la boucle de porteuse ne demeure pas d'une manière stable en mode de poursuite de phase (signal logique IPPP), ou bien que la boucle de code ne trouve pas son équilibre (signal IQPC). De telles dispositions existent dans beaucoup de récepteurs GPS, pour invalider des lignes de visée et/ou pour indiquer à l'usager qu'une ligne de visée est douteuse. Le choix des signaux utilisés comme base pour cela dépend largement de la conception des boucles de poursuite de porteuse et de code. Si la ligne de visée est invalidée, le récepteur ne valide pas les estimées correspondantes, et travaille seulement avec les estimées disponibles pour les autres lignes de visée. Il peut tenter une nouvelle phase d'accrochage ou ré-accrochage avec le même satellite, ou plutôt rechercher un autre satellite plus propice.

Il apparaît donc que le récepteur est sensible :

a) au niveau moyen d'énergie du signal et à la loi de fluctuation d'amplitude pour la détection,
b) à la répartition spectrale de l'énergie pour la poursuite porteuse,
c) à la répartition temporelle de l'énergie pour la poursuite code.

La Demanderesse a observé que la présence de multiples trajets indésirables agit sur ces trois caractéristiques et peut fausser les mesures générées par le récepteur pour un satellite donné. on sait que, pour des signaux sans interférence, et pour un GPS absolu, l'erreur de position peut aller jusqu'à 175 mètres (en tridimensionnel). Cette erreur tombe de 1 à 10 mètres en GPS différentiel ; en interférométrie différentielle (géodésie, détermination d'attitude), l'erreur devient de quelques centimètres, toujours en mode tri-dimensionnel. Dans ces applications, où la classe de précision recherchée est nettement meilleure, lorsqu'on utilise par exemple un GPS différentiel en code ou en phase, ou bien en interférométrie à base courte, le phénomène de multiples trajets devient même un obstacle majeur, qui compromet la précision attendue du récepteur GPS.

La Demanderesse a également remarqué que la probabilité d'apparition simultanée de trajets multiples sur différents canaux est faible. En outre, du fait que l'on travaille de façon générale en redondance des mesures disponibles, avec plusieurs satellites, il est généralement possible de continuer le calcul de la solution de navigation en éliminant une, voire deux mesures douteuses.

Dans cet esprit, la Demanderesse a recherché des techniques qui permettent d'identifier ou détecter les mesures douteuses en raison de multiples trajets, sans chercher a priori à en déduire des corrections de ces mesures douteuses.

Les techniques ici proposées font intervenir une double analyse, à savoir une analyse fréquentielle, effectuée au niveau de la boucle de porteuse, et une analyse temporelle, effectuée en liaison avec la boucle de code, et à l'aide d'une voie de corrélation supplémentaire.

En bref, et comme on le verra, l'analyse fréquentielle vise d'abord à détecter les trajets multiples dont la composante Doppler se démarque de celle du trajet direct, alors que l'analyse temporelle vient la compléter en traitant la détection des trajets multiples dont l'écart Doppler avec le trajet direct est faible ou très faible.

On décrira tout d'abord l'analyse fréquentielle. Cette technique offre une synergie particulièrement intéressante avec l'analyse temporelle, mais conserve aussi un intérêt propre, indépendamment de cette analyse temporelle.

Sur la figure 6, le bloc 38A désigne un circuit de transformation de Fourier rapide, ou FFT, avec pour signaux d'entrée I_A et Q_A.

Cette transformation de Fourier rapide s'effectue sur 512 points à 1 milliseconde, par exemple. Le circuit d'analyse 39A recevant la sortie de la transformation de Fourier va effectuer différentes opérations que l'on détaillera plus loin, en liaison avec l'unité de gestion/décision 90 (en pratique, le circuit 39A est incorporé à l'unité 90).

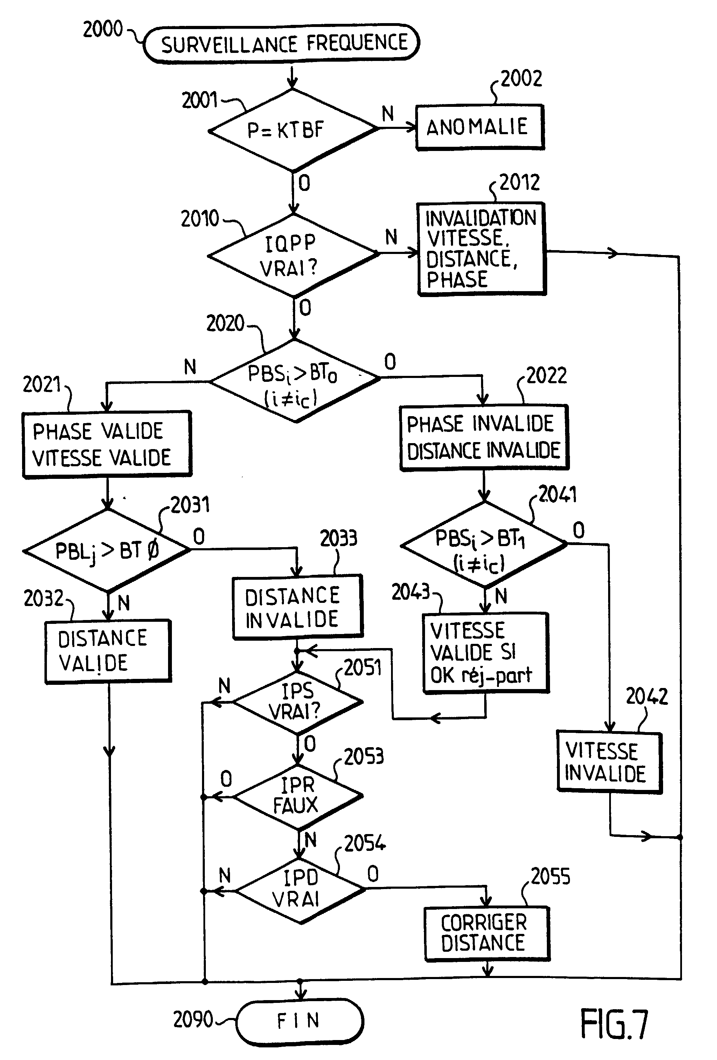

Le fonctionnement du circuit d'analyse 39A est conforme au mécanisme de surveillance fréquentielle illustré sur la figure 7. Après le bloc d'entrée 2000, la surveillance fréquentielle comprend un premier test 2001, qui consiste à examiner si le niveau de signal P à l'entrée est normal, c'est-à-dire égal au bruit thermique KTBF, à une tolérance près. Si cette condition n'est pas vérifiée, il s'agit d'une anomalie générale - un dysfonctionnement sérieux susceptible de porter sur différentes parties du récepteur - donc en principe non diagnosticable en termes de multiples trajets.

La suite du mécanisme fait intervenir des signaux logiques, tels IQPP, émanant notamment de la boucle de poursuite porteuse 40.

Si l'indice IQPP est faux (état 2010), indiquant par exemple que le bruit du comparateur de phase est excessif, alors l'étape 2012 invalide la vitesse, la distance et la phase, pour le canal considéré.

Cette situation correspond au cas de la figure 8A (dans ce qui suit on se référera sans distinction aux figures 8i-1 et 8i-2, où i=A à G), où l'on trouve en même temps dans la case centrale de la sortie de la FFT (voir plus particulièrement les figures 8i-2) la contribution d'un signal direct, ainsi que d'un signal de réflexion spéculaire fort. La "ligne de visée" ne peut pas être définie d'une manière stable. S'agissant d'un récepteur GPS installé à bord d'un aéronef, cette situation peut se présenter notamment lors d'un virage au-dessus d'un lac, ou d'une mer d'huile, à basse ou moyenne altitude, ce qui se traduit par une réflexion spéculaire proche du signal direct. Il peut éventuellement s'y ajouter un fond spectral ou des raies fortes supplémentaires.

La suite du mécanisme de la figure 7 fait intervenir:

- les différentes cases de la FFT, désignées par un indice i, égal à c pour la case centrale, où se trouve le signal direct correspondant à la ligne de visée,
- un domaine dit "bande de sécurité", centré sur la case centrale, et dont la largeur de ce domaine de sécurité correspond avantageusement à une réjection significative par la boucle de poursuite de porteuse, typiquement -10 dB; on note $PBS_i$ la puissance reçue dans la case i de la bande de sécurité, avec i compris entre c-s et c+s, en excluant en principe sa case centrale ($i \neq c$);
- un domaine dit "bandes latérales" correspondant au reste des cases de la FFT, soit j < c-s ou j > c+s; $PBL_j$ indique maintenant la puissance (ou niveau) obtenu dans la case j de l'une des deux bandes latérales, situées de part et d'autre de cette bande de sécurité,
- des grandeurs de seuils BT0 et BT1, définies par rapport au bruit thermique, avec BT1 > BT0. Typiquement, BT0 est défini en fonction du nombre de points de la FFT, et éventuellement du fait que l'on aura fait la moyenne de plusieurs carrés de modules de FFT successives. BT1 est choisi en vue d'une définition nette d'un "fort niveau" par rapport à BT0, comme on le verra plus loin. Dans certains cas, il peut être avantageux que ces grandeurs de seuil BT0 et BT1 soient rendues dynamiques.

Le test 2020 (figure 7) porte, pour chacune des cases exceptée la case centrale d'indice c, sur le fait que la puissance $PBS_i$ franchit le seuil BT0 dans l'une au moins des cases FFT de la bande de sécurité (voir par exemple figures 8B et 8D). Si aucun franchissement de ce genre n'existe (en dehors de la case centrale), l'étape 2021 constate que les données de phase et de vitesse sont valides, le statut de la donnée de distance restant à déterminer. Si, au contraire, PBS$_i$ dépasse le seuil BT0 dans au moins l'une des cases considérées de la FFT (hors la case centrale), l'étape 2022 établit que les données de phase sont invalides et que les données de distance sont en principe invalides, le sort des données de vitesses restant à préciser.

On considère maintenant la sortie de l'étape 2021. Le test 2031 recherche aussi si, dans au moins l'une des cases de bandes latérales, PBL$_j$ dépasse le seuil BT0. Si la réponse est non, l'étape 2032 établit que les données de distance sont valides, et l'on passe directement à l'étape de fin 2090. En effet, dans ce cas, toutes les cases de la FFT sauf la case centrale sont en dessous du seuil BT0.

Si le test 2031 indique que PBL$_j$ dépasse le niveau BT0 dans l'une au moins des cases des bandes latérales (figure 8C), alors l'étape 2033 établit que les données de distance sont en principe invalides, sous réserve de l'éventuelle correction dont on parlera ci-après.

Cela peut correspondre à une réflexion spéculaire forte isolée dans une case FFT des bandes latérales (Fig. 8C). Ce cas se rencontre lorsqu'un aéronef effectue un virage au dessus du sol, lequel comporte un objet fixe réfléchissant, et produisant un défilement Doppler, vu de l'aéronef.

Si, en revanche, ce défilement Doppler est faible, la raie de réflexion spéculaire forte se trouve alors dans la bande de sécurité (Fig. 8D), et a engendré un passage à l'étape 2022.

On retourne maintenant à la sortie de l'étape 2022. Un test 2041 compare le niveau dans chacune des cases de la bande de sécurité, exceptée la case centrale, au seuil BT1 qui est supérieur à BT0. Ce test recherche donc s'il y a un franchissement de fort niveau du seuil dans la bande de sécurité hormis la case centrale.

Si la réponse est oui, l'étape 2042 détermine que les données de vitesse sont également invalides, et l'on passe à l'étape de fin 2090.

Si la réponse est non, l'étape 2043 admet que les données de vitesse sont valides, dans la mesure où le signal logique IRBP indique que la réjection effectuée par la boucle de porteuse est correcte.

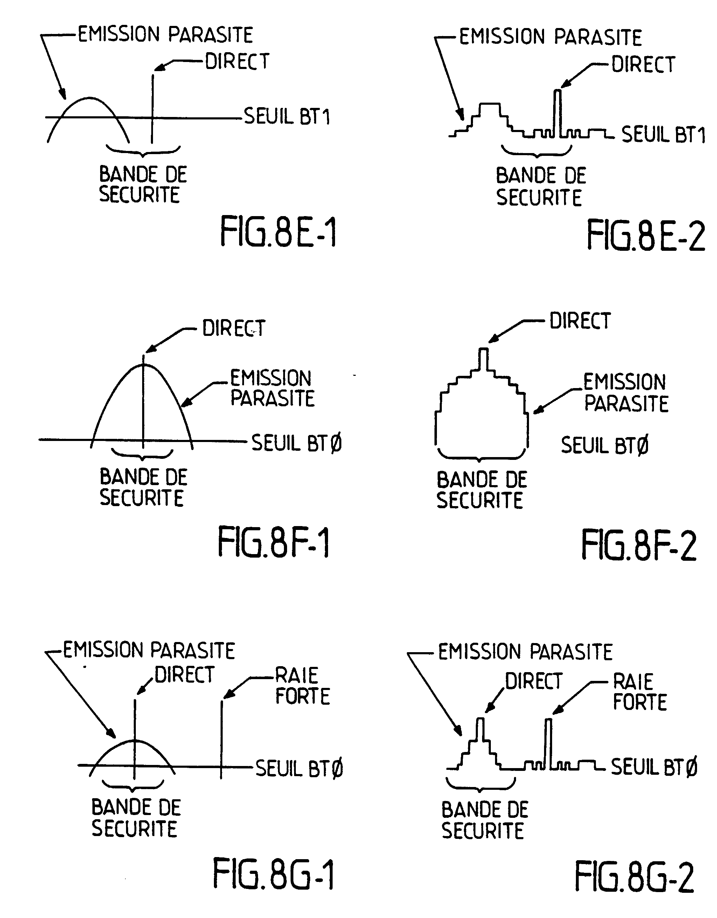

On considère le cas où un émetteur perturbateur, proche du récepteur, provoque une interférence, mais sans que la puissance à l'entrée du récepteur ne s'en trouve sensiblement modifiée. Si cette émission parasite est latérale (Fig. 8E), elle dépasse le seuil BT0, mais non le seuil BT1, dans la bande de sécurité, et n'est pas assimilable à une réflexion diffuse; d'où le passage par l'étape 2043 dans ce cas.

Si au contraire l'émission parasite dépasse le seuil BT1 dans la bande de sécurité (Fig. 8F), alors on passe par l'étape 2042.

A partir des étapes 2033 ou 2043, on peut passer directement à l'étape de fin 2090. La figure 7 illustre une variante optionnelle, sur laquelle on reviendra plus loin.

On considère maintenant l'analyse temporelle, en mode poursuite.

Sur la figure 6, la sortie de l'étage 50 d'écartomètrie avec boucle à verrouillage de phase (PLL) de la boucle de code fournit une grandeur d'écart D_B.

La voie C reçoit la réplique C2 (893 E moins 893 L); elle a donc le même centre que la voie B, mais un espacement plus grand, l'écart temporel entre 893 E et 893 L étant supérieur à celui entre 892 E et 892 L. Une unité d'écartométrie 60 (identique à l'unité 50, à l'exception de l'espacement entre les portes qui subdivisent l'espacement) construit une grandeur d'écart D_C, à partir des composantes en phase I_C et en quadrature Q_C disponibles en sortie de la voie C.

En outre, un soustracteur 61 construit la différence

$$Z = D\_B - D\_C.$$

L'analyse temporelle comprend la surveillance du module du signal D_C (ou de son carré), et/ou la surveillance du module du signal Z (ou de son carré). La figure 10 montre que ces modules |D_C| et |Z| sont comparés (901,902) à des seuils respectifs M$_C$ et M$_Z$. Un module de décision 910 utilise le dépassement des seuils pour construire une indication de la présence de multiples trajets, comme on le verra ci-après. Bien que l'on préfère actuellement utiliser les deux signaux D_C et Z, il est envisageable d'utiliser un seul de ces deux signaux, du moins pour certaines applications. En pratique, les éléments 901, 902 et 910 font partie de l'unité de gestion/décision 90.

En outre, l'invention n'exclut pas la surveillance du module du signal D_B (ou de son carré), en particulier dans un récepteur qui n'aurait pas de voie C. La largeur d'écartométrie de la voie B peut alors être augmentée.

On rappelle que les signaux D_B et D_C résultent de l'intégration sur un nombre important de corrélations individuelles. Cette intégration peut aller de quelques centaines de millisecondes à quelques secondes, suivant la dynamique du phénomène de trajets multiples pour l'application considérée. De plus, l'espacement de la voie C étant nettement plus large que celui de la voie B, la contribution du bruit dans le signal D_C est nettement supérieure à celle du bruit dans le signal D_B.

A titre non limitatif, on considère ci-après que x et y sont choisis pour correspondre à des espacements de 0,2 chip et 1 chip, respectivement, pour les voies B et C. La valeur 2x peut descendre jusqu'à 0,1 chip environ; quant à y, on observe une atténuation assez rapide au delà de 1 chip. De préférence, y est pris aussi grand que possible par rapport à x.

La voie B alimente la poursuite distance (sur le code), via le produit scalaire et la normalisation obtenus à partir de la voie A. Après un régime transitoire plus ou moins long, l'asservissement réalisé par la boucle de code trouve en principe toujours une position d'équilibre, du moins lorsqu'on travaille sur la base du produit scalaire.

Dès lors que la fenêtre ou écartomètre temporel de la voie B, d'espacement 2.x étroit, reçoit seulement le trajet direct, la grandeur D_B est à zéro, abstraction faite du bruit, lorsque l'asservissement réalisé par la boucle de code est stabilisé (comme rappelé à l'intérieur du bloc 50). Dans ces conditions, comme la voie C a le même centre, la grandeur D_C est également à zéro, abstraction faite du bruit, mais sous réserve que la fenêtre ou écartomètre temporel de la voie C, d'espacement 2.y grand par rapport à 2.x, reçoive seulement le trajet direct, elle aussi.

La poursuite est dite canonique lorsqu'il n'y a qu'un trajet direct, et rien d'autre (au bruit près) entre l'émetteur (le satellite) et le récepteur. Dans ce cas, le signal direct est associé à un retard $\tau_D$ (par rapport à la base de temps locale) qui est normalement voisin du centre $\hat{\tau}$ de la voie B. Ce signal aura les mêmes contributions sur la voie B et sur la voie C, car il entre à la fois dans les fenêtres de ces deux voies.

Par contre, dans une situation de multiples trajets, le signal direct $S_D$ est accompagné d'un signal réfléchi $S_R$, au moins. On note $\tau_R$ le retard du trajet réfléchi, et $d_{RD}$ la différence $\tau_R - \tau_D$. Les travaux de la Demanderesse lui ont permis de faire plusieurs constatations:

a) si deux signaux GPS portant le même code satellite, par exemple l'un direct, l'autre réfléchi, sont simultanément présents à l'intérieur d'un même écartomètre (voie B et/ou C), celui-ci prend une position d'équilibre $\hat{\tau}$ qui est différente à la fois du retard $\tau_D$ du trajet direct et du retard $\tau_R$ du trajet réfléchi. Le module de la sortie de cet écartomètre, hors bruit, est d'autant plus différent de zéro que l'écart de phase entre les signaux direct $S_D$ et réfléchi $S_R$ est plus différent de $k\pi$ (k entier, et phases définies par rapport à la fréquence porteuse, Doppler compris). Une première possibilité de détection d'anomalie (indication de la présence de multiples trajets) peut donc être fournie par le fait que le module de la sortie de cet écartomètre dépasse un seuil. Ce seuil tient compte du niveau de bruit attendu ou mesuré; il est sensiblement proportionnel au temps d'intégration; il tient compte aussi d'un risque d'erreur admis ("probabilité de fausse alarme" ou Pfa). A ce stade, les signaux D_B et/ou D_C sont utilisables.

b) si les deux signaux GPS sont à $k\pi$ près (soit en phase ou en opposition de phase), la position d'équilibre $\hat{\tau}$ atteinte par l'écartomètre est telle que le module de sa sortie soit nul. Mais la valeur de $\hat{\tau}$ dépend de l'écart utilisé entre les deux portes E et L de cet écartomètre. Si l'on utilise deux écartomètres, d'écartement de portes différents, et que l'on pilote la poursuite avec l'écartomètre étroit (comme c'est ici le cas), l'écartomètre large, de même centre, fournit une sortie de module non nul, car sa propre position d'équilibre $\hat{\hat{\tau}}$ ne correspond pas à $\hat{\tau}$. Une seconde détection d'anomalie peut donc se faire en utilisant deux écartomètres, l'un étroit pour la poursuite, l'autre large pour la surveillance. Il a également été observé que l'écart entre les deux positions d'équilibre $\hat{\tau}$ et $\hat{\hat{\tau}}$ est plus grand lorsque l'écart de phase est $\pi$ que lorsqu'il est nul (à $2k\pi$ près). Ceci est particulièrement intéressant, puisque l'écart n ou situation en opposition de phase est le cas le plus gênant.

c) lorsque l'on n'est plus en mode stationnaire, par exemple au moment de l'apparition (rapide ou non) d'un signal réfléchi $S_R$, ou bien en présence d'un écart de fréquence significatif entre le signal direct $S_D$ et le signal réfléchi $S_R$, il a été observé que le module de Z peut avantageusement remplacer ou compléter l'indication donnée par le module de D_C, du fait qu'il contient moins de bruit que celuici.

On précisera maintenant ce qui précède, en tenant compte du bruit.

La Demanderesse a observé ceci: dès lors que la boucle de code fonctionne de manière normale et stabilisée sur le trajet direct seulement ("poursuite canonique" du code à l'aide de la voie B), la contribution de l'erreur résiduelle de positionnement de la boucle de code dans |D_C| (le module du signal D_C) est nettement au dessous du bruit contenu dans D_C (typiquement dans un rapport de l'ordre de 10). Elle est donc négligeable.

Il est alors proposé de fixer pour |D_C| un seuil $M_C$, dont le franchissement sera indicatif de la présence d'un trajet supplémentaire. Ce seuil peut être fixé par rapport au niveau de bruit attendu dans la voie C, et compte-tenu d'un risque d'erreur admis ("probabilité de fausse alarme" ou Pfa). Le seuil est proportionnel au temps d'intégration.

Par exemple, pour 7 satellites disponibles, la Pfa est de 14%, si l'on admet de rejeter en moyenne une ligne de visée pour chaque jeu de 7 mesures simultanées utilisables pour calculer un positionnement. On peut alors en déduire par calcul numérique le seuil à appliquer à la voie C, compte tenu des paramètres de fonctionnement du récepteur.

Si |D_C| dépasse $M_C$, l'unité de gestion/décision 90 va donc décider d'invalider la ligne de visée en cours. On peut faire de même avec $D\_B$, pour la voie B, comme déjà indiqué.

On verra maintenant que le signal Z contient d'intéressantes informations sur l'existence et l'amplitude des signaux issus de trajets autres que le trajet direct.

Dans le cas d'une poursuite canonique, la différence Z ne comporte que du bruit. Mais la Demanderesse a observé que le bruit dans $Z = D\_B - D\_C$ est inférieur au bruit dans $D\_C$, et ce typiquement d'environ 20 % pour un rapport 5 entre y et x (y=5x).

Il est apparu que, dans la différence $D\_B - D\_C$, le bruit de $D\_B$ se soustrait partiellement du bruit de $D\_C$: dans la partie commune des fenêtres de la voie C et de la voie B, il existe une composante de bruit qui dépend du positionnement et de l'écart, et est donc différente dans l'une et l'autre voie, mais aussi un fonds temporel de bruit, qui est le même, et disparaît par soustraction. En d'autres termes, c'est leur espacement différent qui décorrèle plus ou moins les sorties des deux corrélateurs des voies B et C.

Sur la figure 9C, l'abscisse représente l'écart temporel $d_{RD}$ (sans préoccupation d'échelle), tandis que l'ordonnée représente $Z$, à une échelle définie de la manière suivante:

$$AX = A_R \ (1 - x/v)$$

où $A_R = N \ a_r \ 0,6/\sigma$, $a_r$ étant l'amplitude réelle du signal réfléchi $S_R$, tel que reçu, N le nombre de points d'échantillonnage (le produit de la fréquence d'échantillonnage $F_e$ par le temps d'intégration dt), et $\sigma$ l'écart-type du bruit dans la bande utile en sortie de l'étage d'entrée du récepteur.

Sur la figure 9C, on considère en outre que le signal direct est toujours compris dans l'écartomètre de la voie B, tandis que le signal réfléchi va "balayer" l'intervalle de temps de l'écartomètre de la voie C.

Si $d_{RD}$ est inférieur ou égal à +/- x, le signal réfléchi ($S_R$) et le signal direct ($S_D$) auront les mêmes contributions dans la voie B et dans la voie C. La différence Z ne comporte donc que du bruit. C'est ce qu'illustre la figure 9C entre les abscisses -x et +x.

Pour le reste, la Demanderesse a observé que:

- lorsque $d_{RD}$ est compris entre +x et 2.v-y, il demeure une contribution croissante due au signal réfléchi $S_R$ dans la voie B, laquelle, avec la contribution de $S_R$ dans la voie C, produit une croissance jusqu'à une valeur maximale +AX;
- lorsque $d_{RD}$ est compris entre 2.v-y et 2.v-x, la situation est la même que ci-dessus, sauf que la résultante devient décroissante, descendant de +AX à +AX/2;
- lorsque $d_{RD}$ est compris entre 2.v-x et 2.v+x, il n'y a plus de contribution croissante due au signal réfléchi $S_R$ dans la voie B. Sa contribution dans la voie C demeure constante à +AX/2;
- lorsque $d_{RD}$ est compris entre 2.v+x et 2.v+y, la contribution due au signal réfléchi $S_R$ dans la voie C décroît vers zéro;
- enfin, au delà de 2.v+y, le signal réfléchi $S_R$ n'est plus vu par la voie C.

La courbe est naturellement symétrique par rapport au point (0,0), pour les valeurs négatives de $d_{RD}$ (dans certaines applications, il peut arriver qu'un signal "réfléchi" - ou assimilé, en principe un signal de leurrage - arrive avant le signal "direct").

Pour bien comprendre la figure 9C, il est nécessaire de tenir compte des éléments suivants:

- on a tracé le module de la différence $D\_B - D\_C$,
- la poursuite distance sur la voie B s'effectue sur ce que "voit" la voie B de la résultante des signaux $S_D$ et $S_R$,
- on a supposé $\tau_D$ compris entre -x et + x,
- en outre, la représentation de la figure 9C suppose que 2.y vaut 1 chip, soit y = v ; s'il en est autrement, l'intervalle de surveillance possible est diminué.

Il résulte de ce qui précède que la présence d'un trajet réfléchi en plus du trajet direct, et à plus de x unités temporelles de ce trajet direct, se traduit dans le signal Z par une composante continue, qui dépasse le niveau de bruit que contient ce signal.

L'application d'un seuil $M_Z$ convenablement choisi au signal Z permet d'identifier la présence de trajets multiples dans la voie C et/ou B, et d'en tirer les conséquences sur le bon fonctionnement de la voie B, donc de la boucle de code qu'elle pilote. Une façon - non limitative - de fixer ce seuil $M_Z$ consiste à prendre le seuil $M_C$ prévu pour le signal $D\_C$ lui-même, modifié à proportion du rapport des niveaux de bruit respectifs de $D\_C$ et de Z (80 %, si le bruit dans Z est 20 % sous le bruit dans $D\_C$). Le signal $Z$ est donc lui aussi un bon indicateur de l'existence de multiples trajets.

Un autre facteur à prendre en compte est la "dynamique fréquentielle" ou "dynamique porteuse" du signal incident. En cas de forte accélération relative, il apparaît un décalage de fréquence de la porteuse. Les boucles de poursuite supportent cette dynamique fréquentielle dans la limite de leur bande passante. Il va en résulter cependant un retard ou "traînée" dans la réponse de ces boucles. Et cette traînée crée une composante continue, qui apparaît dans les signaux $D\_B$ et $D\_C$, et peut faire par exemple que $D\_C$ dépasse le seuil $M_C$, en présence d'une forte accélération relative lorsque les bandes passantes ne sont plus adaptées à la dynamique du récepteur, ce qui correspond à un mauvais usage par l'utilisateur, et, alors qu'il n'y a pas de trajet multiple. On observera par contre que le signal Z est, de son côté, débarrassé de cette traînée, par différence.

Il est donc toujours possible en considérant les signaux D_C et Z, leurs seuils respectifs, et les conditions de travail de la boucle de poursuite (en particulier le signal logique ITPP déjà cité), d'obtenir une indication fiable de la présence de trajets multiples. On notera que le signal ITPP peut être fourni par le fait que la détection fréquentielle donne le signal principal non pas dans la case centrale, mais dans l'une des cases voisines (ou à cheval sur des cases adjacentes voisines). La structure à double écartomètre proposée est donc particulièrement intéressante en elle-même à cet effet.

Les résultats de l'analyse fréquentielle et/ou de l'analyse temporelle servent à écarter sélectivement les mesures (une "ligne de visée", ou plusieurs) identifiées comme partiellement ou totalement douteuses selon la présente invention. Les indicateurs fournis ici viennent donc compléter avantageusement les indicateurs (indépendants des trajets multiples) qui sont -déjà utilisés dans les récepteurs connus pour écarter une ligne de visée fournissant une mesure douteuse.

On considère maintenant le cas d'une invalidation partielle ou par exemple seule la "vitesse" reste valide. Dans ce cas, il demeure possible d'utiliser des informations partiellement valides pour la résolution des équations de navigation, en fonction de la précision recherchée, sinon la ligne de visée est invalidée.

Ajoutée à l'analyse fréquentielle, l'analyse temporelle donne un moyen supplémentaire très intéressant pour détecter la présence de trajets réfléchis. Sur cette détection, on invalide toutes les mesures correspondant à la ligne de visée considérée.

En effet, l'analyse fréquentielle permet de séparer des signaux réfléchis du signal direct lorsque la distance du réflecteur à l'aérien du récepteur est variable (écart Doppler non nul). C'est par exemple le cas d'un avion en vol ascendant ou descendant par rapport à un sol réfléchissant, ou bien le cas d'un véhicule terrestre qui évolue à côté d'une surface potentiellement réfléchissante, et non parallèle au vecteur vitesse du véhicule.

En outre, l'analyse temporelle qui vient d'être décrite donne une information la où l'analyse fréquentielle est peu efficace, c'est à dire à écart Doppler faible ou nul entre le signal direct et le ou des signaux réfléchis. C'est par exemple le cas pour un aéronef en vol horizontal par rapport à un sol réfléchissant, ou bien pour un récepteur stationnaire (fixe par rapport aux surfaces réfléchissantes).

On notera que les deux traitements sont entièrement menés en parallèle, et sans aucun multiplexage des corrélations et autres asservissements. Ils permettent en outre de traiter des multiples trajets aussi bien du type diffus que spéculaires, ce qu'aucun moyen connu n'a permis jusqu'à présent.

L'analyse fréquentielle est particulièrement efficace pour les multiples trajets diffus, et, à ce titre, intéressante à elle seule. Plus précisément, les trajets diffus jouent sur la forme de la fonction de corrélation des codes d'une manière qui dépend de la vitesse du porteur du récepteur, d'où la nécessité d'un temps d'analyse court. Dans ce cas, l'analyse fréquentielle agit pleinement.

Comparativement à l'analyse temporelle décrite, il a déjà été proposé d'analyser partiellement la forme de la courbe de corrélation, notamment dans FR-A-2 698 966. Pour mener cette analyse plus profondément, il faudrait soit prévoir un grand nombre de corrélateurs, ce qui est lourd, soit, si l'on ne dispose que d'un nombre de corrélateurs limité, décaler ceux-ci successivement dans le temps, et prévoir un temps d'analyse élevé, en supposant en outre que la forme de la courbe de corrélation est stable pendant tout ce temps d'analyse, au moins. Comparativement, l'analyse par double écartométrie (voies B et C), telle que proposée, est simple, immédiate, et ne suppose pas une forme stable de la courbe de corrélation sur un intervalle de temps long.

Comme on l'a vu, la combinaison de l'analyse fréquentielle et de l'analyse temporelle permet de rejeter les mesures de façon bien discriminatoire:

- s'il y a détection fréquentielle de trajets multiples, spéculaires et/ou diffus, la mesure de distance sur la ligne de visée considérée est invalidée par précaution,
- si l'écart Doppler est faible, on invalide les mesures de vitesse et phase issues de la boucle de porteuse,
- si l'écart Doppler est grand, on valide par contre les mesures de vitesse et phase issues de la boucle de porteuse,
- s'il y a détection de trajets multiples par l'analyse temporelle, on invalide toutes les mesures correspondantes, par précaution.

Bien que l'idée de base de l'invention soit de détecter la présence de trajets multiples, il demeure envisageable de chercher à les corriger, du moins dans certains cas. Un exemple d'une telle correction optionnelle apparaît sur la figure 7.

Avec cette option de correction, à partir des étapes 2033 ou 2043, on aboutira au test 2051, qui part d'une variable logique IPS (Indicateur de Possibilité de retour Sol), laquelle indique si l'altitude et l'élévation permettent l'observation des trajets multiples sur la ligne de visée en cours. Cette opération doit tenir compte de la relation suivante :

$$2.H.\sin\Theta < \delta Dmin,$$

où H est l'altitude, $\Theta$ est l'angle d'incidence des ondes sur le récepteur par rapport à l'horizontale ("élévation"), et $\delta Dmin$ représente un écart plafond entre signal direct et signal réfléchi, au-delà duquel la perturbation ne provoque plus de biais significatif en distance. Cette grandeur $\delta Dmin$ est établie en fonction de l'espacement du corrélateur différentiel utilisé dans la voie B; $\delta Dmin$ correspond typiquement à 250 mètres dans l'exemple décrit. De leur côté, H et Θ sont déterminables, au besoin à l'aide des instruments de bord d'un avion. Une valeur approchée suffisante de H peut être obtenue en utilisant toutes les mesures (même celles qui sont polluées par des trajets multiples). Et Θ est calculable précisément, car le positionnement obtenu avec toutes les mesures sera faux au plus de 100 à 200 mètres, ce qui est négligeable angulairement, compte-tenu de la distance minimale satellite-récepteur de 20 000 km. On notera incidemment que H est la hauteur par rapport au géoïde, et que l'on n'y accède qu'en ayant en mémoire la hauteur du géoïde par rapport au WGS 84 dans la zone survolée, par exemple 50 mètres dans l'océan atlantique, en face des Landes.

Si IPS est faux, la distance reste invalide comme défini à l'étape 2033, et l'on passe à l'étape de fin 2090.

Dans le cas contraire, on passe au test suivant 2053. Ce test porte sur l'existence de cases FFT avec franchissement du seuil BT0 (abstraction faite de la case centrale), mais demeurant isolées. Ce caractère isolé est avantageusement déterminé par le fait que, pour chaque case franchie, les deux cases inférieures adjacentes et les deux cases supérieures adjacentes ne font par contre pas l'objet d'un franchissement du niveau de bruit BT0. Si la réponse est oui (case isolée), le signal IPR est vrai, et l'on passe à l'étape de fin 2090. Ceci correspond notamment au cas illustré en figure 8G, que l'on retrouve aussi en 8D et 8C.

Dans le cas contraire, le test 2054 recherche s'il existe une seule série de cases non isolées, faisant l'objet d'un franchissement du seuil BT0, et conservant un contraste important entre le signal direct et celui qui est contenu dans chacune de ces cases. En outre, la fréquence centrale définissable sur l'ensemble de ces cases franchissant le seuil BT0 doit demeurer relativement proche de la case centrale. Si tout cela est faux, on passe directement à l'étape de fin 2090, la distance restant invalide.

Dans le cas contraire, il est envisageable à l'étape 2055 de corriger la distance d'après l'intégrale de l'énergie dans cette série ou "continuum" de cases entourant la case centrale, et possédant une fréquence centrale relativement proche de celle de la case centrale. Cette situation correspond au schéma de la figure 8B (le contraste est insuffisant sur la figure 8F).

L'invention n'est pas limitée au mode de réalisation décrit, en particulier pour ce qui touche au récepteur à trois voies à partir duquel l'invention est ici décrite. Un nombre supérieur de voies n'est pas exclu. Dans certains cas de figure, on pourrait envisager d'intervertir les rôles des voies B et C. On pourrait aussi envisager que ces voies n'aient pas le même centre (entre elles, ou que la voie A), notamment pour tenir compte du fait que les trajets réfléchis naturels sont postérieurs au trajet direct.

De façon plus générale, l'invention peut s'étendre à d'autres systèmes de radio-positionnement (ou plus généralement de radio-navigation) que le GPS, qu'ils soient fondés sur des satellites, comme le système GLONASS, ou bien terrestres. Dans le cas du système GLONASS, on sait que les satellites utilisent des fréquences porteuses différentes, modulées en bi-phasé par un code pseudo-aléatoire qui leur est commun; l'homme du métier saura faire les adaptations requises pour la mise en oeuvre de la présente invention.

De plus, on utilise ici les ondes pour localiser le récepteur; une variante d'application consiste à réémettre des ondes marquées temporellement en fonction des données de temps obtenues par la réception. On pourrait aussi appliquer l'invention par exemple à des stations de référence (dont la position est connue a priori), permettant à des récepteurs GPS mobiles du voisinage de travailler en mode différentiel, bien que la contrainte économique s'applique beaucoup moins à la conception de telles stations de référence, et que d'autres moyens soient par conséquent envisageables dans ce dernier cas.

## Revendications

1. Dispositif récepteur de signaux radio-électriques comprenant une onde porteuse modulée munie d'un marqueur temporel à pseudo-bruit répétitif, du genre code pseudo-aléatoire, en particulier pour la radionavigation,

   le dispositif comportant une réception haute fréquence, qui fournit un signal utile à plusieurs modules à coïncidence, dont chacun est affecté à un calage temporel sur un signal radio-électrique respectif choisi, et des moyens d'exploitation (90) des données de calage temporel fournies par ces modules à coïncidence,

   tandis que chaque module à coïncidence comprend:

   - des moyens à mémoire chronométrique (71-75,80-89), aptes à stocker, comme données de calage temporel, une estimée de calage de code (C_PHI) et une estimée d'état de porteuse en fréquence (P_DF) et phase (P_PHI), ainsi qu'à en tirer, avec une horloge locale, une image locale de porteuse et au moins une réplique locale du code, pour le signal radio-électrique concerné, et

   - des asservissements de code et de porteuse (40,50,59), opérant par corrélation (311A, 312A;311B,312B) entre le signal utile et la réplique locale de code, ainsi qu'à l'aide d'un signal d'écart de fréquence et de phase (DVCa) entre la porteuse présente dans le signal utile et ladite image de porteuse, afin de faire coïncider la réplique locale du code avec le code reçu,

caractérisé en ce qu'il comprend des moyens de transformation de Fourier (38A) recevant le signal (DVCa) d'écart de fréquence et phase de porteuse, et des moyens de décision (39A,90) capables d'invalider au moins partiellement les données de calage temporel (C_PHI,P_DF,P_PHI), lorsque la transformation de Fourier indique la présence d'énergie en dehors du voisinage d'une raie centrale, correspondant à la coïncidence, ce qui fournit une indication de présence de multiples trajets.

2. Dispositif selon la revendication 1, caractérisé en ce que les moyens de décision sont agencés pour valider les estimées de fréquence (P_DF) et de phase de porteuse (P_PHI), lorsque le niveau d'énergie obtenu dans une bande de sécurité avoisinant la raie centrale, celle-ci étant exclue, reste inférieur (2020,2021) à un niveau de référence (BT0).

3. Dispositif selon la revendication 2, caractérisé en ce que les moyens de décision sont agencés pour valider l'estimée de calage de code (C_PHI) lorsque le niveau d'énergie obtenu dans des bandes latérales à la bande de sécurité reste inférieur (2031,2032) à un niveau de référence (BT0).

4. Dispositif selon la revendication 2, caractérisé en ce que les moyens de décision sont agencés pour invalider au moins l'estimée de phase de porteuse (P_PHI), lorsque le niveau d'énergie obtenu dans ladite bande de sécurité, raie centrale exclue, dépasse (2020,2022) le niveau de référence (BT0).

5. Dispositif selon la revendication 4, caractérisé en ce que les moyens de décision sont agencés pour invalider en outre l'estimée de fréquence (P_DF) de porteuse et l'estimée de calage de code (C_PHI), lorsque le niveau d'énergie obtenu dans la bande de sécurité dépasse (2041,2042) un second niveau de référence (BT1), supérieur au premier (BT0).

6. Dispositif selon la revendication 4, caractérisé en ce que les moyens de décision sont agencés pour valider l'estimée de fréquence (P_DF) de porteuse, lorsque le niveau d'énergie obtenu dans la bande de sécurité ne dépasse pas (2041,2043) le second niveau de référence (BT1), sous réserve du bon fonctionnement de l'asservissement de porteuse (IRBP).

7. Dispositif selon l'une des revendications 2, 4 et 6, caractérisé en ce que les moyens de décision sont agencés pour valider l'estimée de calage de code (C_PHI), lorsque les dépassements dudit seuil (BT0) dans la bande de sécurité (2055) satisfont des conditions prédéterminées portant sur l'une au moins des propriétés suivantes : continuité, centrage et non dépassement du second seuil (BT1).

8. Dispositif selon l'une des revendications précédentes, caractérisé en ce que les moyens formant mémoire chronométrique comprennent un oscillateur de porteuse (71) pour définir l'image locale de porteuse, un oscillateur de code (81), et un générateur (85-89) d'au moins une réplique locale du code.

9. Dispositif selon l'une des revendications précédentes, caractérisé en ce que les asservissements de code et de porteuse (40,50,59) comprennent:

- une voie de corrélation ponctuelle (A), comportant une démodulation selon ladite image de porteuse, et fournissant un signal de coïncidence (I_A,Q_A) entre la position temporelle du code dans le signal utile et son estimée de codage de code,

- au moins une voie de corrélation différentielle (B,C), comportant une démodulation selon ladite image de porteuse, et fournissant un signal d'écart (D_B,D_C) entre la position temporelle du code dans le signal utile et son estimée de codage de code,

- le signal de coïncidence (I_A,Q_A) servant de grandeur d'écart pour une boucle de porteuse à verrouillage de phase, laquelle pilote le générateur (71-75) d'image locale de porteuse, et

- le signal d'écart de code (D_B) servant de grandeur d'écart pour une boucle de code à verrouillage de retard, dont la sortie est combinée (59) à celle de la boucle de porteuse à verrouillage de phase, pour piloter le générateur (80-89) de répliques de code.

10. Dispositif selon la revendication 9, caractérisé en ce que les moyens de décision (90) sont agencés pour établir une autre indication de la présence de multiples trajets en utilisant le signal d'écart (D_B, D_C) issu d'au moins une voie de corrélation différentielle (B,C).

11. Dispositif selon la revendication 10, caractérisé en ce que le module à coïncidence comprend au moins une seconde voie de corrélation différentielle (C), et en ce que les moyens de décision (90) sont agencés pour établir encore une autre indication de la présence de multiples trajets en utilisant le signal d'écart (D_C) issu de cette seconde voie de corrélation différentielle (C).

12. Dispositif selon la revendication 11, caractérisé en ce que la seconde voie de corrélation différentielle (C) possède le même centre que la première.

13. Dispositif selon l'une des revendications 11 et 12, caractérisé en ce que la seconde voie de corrélation différentielle possède un espacement (2.y) différent de celui de la première (2.x).

14. Dispositif selon la revendication 13, caractérisé en ce que la première voie de corrélation différentielle (B) possède un espacement inférieur à 1 pas de code, et en ce que la seconde voie de corrélation différentielle (C) possède un espacement supérieur à celui de la première.

15. Dispositif selon la revendication 14, caractérisé en ce que l'espacement (2.x) de la première voie de corrélation différentielle (B) est de l'ordre du dixième d'un pas de code, tandis que l'espacement (2.y) de la seconde voie de corrélation différentielle (C) est de l'ordre d'un pas de code.

16. Dispositif selon l'une des revendications 11 à 15, caractérisé en ce que les espacements de la première et de la seconde voies de corrélation différentielle sont programmables.

17. Dispositif selon l'une des revendications 10 à 16, caractérisé en ce que les moyens de décision (90) sont agencés pour établir ladite (ou lesdites) autre (s) indication(s) de la présence de multiples trajets lorsque le signal d'écart issu de la voie de corrélation différentielle considérée dépasse un seuil choisi.

18. Dispositif selon l'une des revendications 11 à 16, caractérisé en ce que les moyens de décision (90) sont agencés pour établir l'autre indication de la présence de multiples trajets en fonction d'une comparaison entre le signal d'écart (D_C) issu de la seconde voie de corrélation différentielle et le signal d'écart (D_B) issu de la première voie de corrélation différentielle.

19. Dispositif selon la revendication 18, caractérisé en ce que les moyens de décision (90) sont agencés pour établir ladite autre indication de la présence de multiples trajets en fonction du fait que la différence (Z) entre le signal d'écart issu de la seconde voie de corrélation différentielle et le signal d'écart issu de la première voie de corrélation différentielle dépasse un autre seuil choisi.

20. Dispositif selon l'une des revendications 18 et 19, caractérisé en ce que ladite autre indication de la présence de multiples trajets établie en fonction de la différence (Z) tient compte d'un décentrage de la poursuite en fréquence, indiqué par l'analyse fréquentielle.

SIGNAUX BRUTS

1001 — RECEPTION ANTENNE

1002 — CONVERSION DE FREQUENCE

1003 — ECHANTILLONNAGE ET QUANTIFICATION

1004 — CORRELATION

$\hat{\tau}_1$ : RETARD ESTIME DU CODE ET $\hat{\phi}_1$ : PHASE ESTIMEE DE LA PORTEUSE VENANT DE 1105, 1106 ou 1107

BIT DU MESSAGE DE NAVIGATION VENANT DE 1108 SI DISPONIBLE

1100 — AIGUILLAGE SUIVANT ETAT LIGNE DE VISEE

1105 — ACCROCHAGE

Si OK

1106 — POURSUITE

Si OK

1107 — REACCROCHAGE

1108 — DECODAGE DES MESSAGES DE NAVIGATION

1119 — TEST DE COHERENCE DE L'ENSEMBLE DES MESURES ( RAIM )

DONNEES EVENTUELLES EN PROVENANCE DE CAPTEURS EXTERIEURS AU RECEPTEUR

1110

1120 — CALCUL DE POSITION ET VITESSE

$\vec{P} , \vec{V} , T$

FIG.1

FIG.2

FIG. 3

FIG.4

FIG.5

FIG.10

FIG.6

FIG.7

DIRECT
SPECULAIRE FORT
SEUIL
CASE CENTRALE

FIG.8A-1

DIRECT
SPECULAIRE FORT
SEUIL
CASE CENTRALE

FIG.8A-2

DIRECT
SEUIL BTØ
BANDE DE SECURITE

FIG.8B-1

DIRECT
SEUIL BTØ
BANDE DE SECURITE

FIG.8B-2

1er CAS
DIRECT
CASE CENTRALE
SPECULAIRE FORT
SEUIL BTØ
BANDE DE SECURITE
BANDE LATERALE

FIG.8C-1

1er CAS
DIRECT
CASE CENTRALE
SPECULAIRE FORT
SEUIL BTØ
BANDE DE SECURITE
BANDE LATERALE

FIG.8C-2

2e CAS
DIRECT
CASE CENTRALE
SPECULAIRE FORT
SEUIL BTØ
BANDE DE SECURITE

FIG.8D-1

2e CAS
DIRECT
CASE CENTRALE
SPECULAIRE FORT
SEUIL BTØ
BANDE DE SECURITE

FIG.8D-2

EMISSION PARASITE

DIRECT

SEUIL BT1

BANDE DE
SECURITE

FIG.8E-1

EMISSION PARASITE

DIRECT

SEUIL BT1

BANDE DE
SECURITE

FIG.8E-2

DIRECT

EMISSION
PARASITE

SEUIL BTØ

BANDE DE
SECURITE

FIG.8F-1

DIRECT

EMISSION
PARASITE

SEUIL BTØ

BANDE DE
SECURITE

FIG.8F-2

EMISSION PARASITE

DIRECT

RAIE
FORTE

SEUIL BTØ

BANDE DE
SECURITE

FIG.8G-1

EMISSION PARASITE

DIRECT

RAIE
FORTE

SEUIL BTØ

BANDE DE
SECURITE

FIG.8G-2

25

EP 0 913 702 A1

**FIG.9A**

$|D\_B|$

+x A/v

VOIE  B

0

E-Δ
(−2v−x)

L-Δ
(−2v+x)

E
(−x)

L
(+x)

−x A/V

E+Δ
(2v−x)

L+Δ
(2v+x)

x
0,1 CHIP

**FIG.9B**

$|D\_C|$

+yA/v

VOIE C

E-Δ
(−y−2v)

E
(−y)

L+Δ
(y+2v)

−yA/V

L
(+y)

**FIG.9C**

$|Z|=|D\_B−D\_C|$

+AX

+AX/2

−2v−y    −2v−x    −2v+x    −x

−AX/2

−AX

−y
(= −2v+y)

+x

+y
(=2v−y)

2v−x    2v+x    2v+y

$^d$RD

**Office européen des brevets**

**RAPPORT DE RECHERCHE EUROPEENNE**

Numéro de la demande

EP 98 40 2379

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | WO 97 06446 A (ASHTECH INC)<br>20 février 1997<br>* page 4, ligne 33 – page 6, ligne 22 *<br>--- | 1,8,9 | G01S1/04<br>H04B1/707 |
| A | WO 95 14935 A (NEXUS 1994 LTD) 1 juin 1995<br>* abrégé *<br>* page 12, ligne 17 – ligne 27 *<br>--- | 1,8,9 | |
| A | US 5 347 536 A (MEEHAN THOMAS K)<br>13 septembre 1994<br>* colonne 3, ligne 20 – ligne 43 *<br>----- | 1,8,9 | |

| | | | DOMAINES TECHNIQUES RECHERCHES (Int.Cl.6) |
|---|---|---|---|
| | | | G01S<br>H04B |

Le présent rapport a été établi pour toutes les revendications

| Lieu de la recherche | Date d'achèvement de la recherche | Examinateur |
|---|---|---|
| LA HAYE | 4 janvier 1999 | Haffner, R |

**ANNEXE AU RAPPORT DE RECHERCHE EUROPEENNE
RELATIF A LA DEMANDE DE BREVET EUROPEEN NO.**　　　　EP 98 40 2379

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-01-1999

| Document brevet cité au rapport de recherche | | Date de publication | Membre(s) de la famille de brevet(s) | | Date de publication |
|---|---|---|---|---|---|
| WO 9706446 | A | 20-02-1997 | AU | 1114397 A | 05-03-1997 |
| | | | CA | 2229069 A | 20-02-1997 |
| | | | EP | 0843828 A | 27-05-1998 |
| WO 9514935 | A | 01-06-1995 | US | 5430759 A | 04-07-1995 |
| | | | US | 5583517 A | 10-12-1996 |
| | | | AU | 8113994 A | 13-06-1995 |
| | | | AU | 8114094 A | 13-06-1995 |
| | | | AU | 8114194 A | 13-06-1995 |
| | | | EP | 0730808 A | 11-09-1996 |
| | | | WO | 9515064 A | 01-06-1995 |
| | | | WO | 9514936 A | 01-06-1995 |
| | | | SG | 45367 A | 16-01-1996 |
| | | | US | 5592180 A | 07-01-1997 |
| | | | US | 5546422 A | 13-08-1996 |
| | | | US | 5499266 A | 12-03-1996 |
| | | | US | 5519718 A | 21-05-1996 |
| | | | US | 5596330 A | 21-01-1997 |
| | | | US | 5712867 A | 27-01-1998 |
| US 5347536 | A | 13-09-1994 | AUCUN | | |

EPO FORM P0460

Pour tout renseignement concernant cette annexe : voir Journal Officiel de l'Office européen des brevets, No.12/82